(19) Europäisches Patentamt
European Patent Office
Office européen des brevets

(11) **EP 2 181 884 B1**

(12) **EUROPEAN PATENT SPECIFICATION**

(45) Date of publication and mention
of the grant of the patent:
**26.12.2012 Bulletin 2012/52**

(51) Int Cl.:
***B60L 11/18*** *(2006.01)*  ***G01C 21/20*** *(2006.01)*
***G01C 21/26*** *(2006.01)*  ***G01C 21/34*** *(2006.01)*

(21) Application number: **09012992.5**

(22) Date of filing: **14.10.2009**

(54) **Traveling guidance system, traveling guidance method, and computer program**

Reiseführungssystem, Reiseführungsverfahren und Computerprogramm

Système de guidage mobile, procédé de guidage mobile, et programme informatique

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.10.2008 JP 2008276315**

(43) Date of publication of application:
**05.05.2010 Bulletin 2010/18**

(73) Proprietor: **AISIN AW CO., LTD.**
**Anjo-shi,**
**Aichi-ken 444-1192 (JP)**

(72) Inventors:
• **Naito, Takashi**
**Anjo-shi**
**Aichi-ken 444-1192 (JP)**

• **Muko, Daisuke**
**Anjo-shi**
**Aichi-ken 444-1192 (JP)**
• **Hayashi, Takashi**
**Anjo-shi**
**Aichi-ken 444-1192 (JP)**

(74) Representative: **Kramer - Barske - Schmidtchen**
**Landsberger Strasse 300**
**80687 München (DE)**

(56) References cited:
**JP-A- 10 170 293  US-A- 5 539 399**
**US-A- 5 790 976  US-A- 5 815 824**

**Description**

The present invention relates to a traveling guidance system, a traveling guidance method, and a computer program for introducing a charging facility for charging on-vehicle batteries for a vehicle, which uses a plurality of on-vehicle batteries as a power supply source to a drive source.

Conventionally, when the driver of a vehicle looks at the fuel gauge sometimes when traveling and notices that the remaining fuel is getting short, the driver drives to a fueling facility (for example, a gas station), where he or she remembers, to fuel the vehicle. Further, when using a navigation system, it is possible to detect the vehicle position with the navigation system even in an area unfamiliar to the driver, and then nearby fueling facilities are displayed on the navigation screen, so that the driver can look for the position of the nearest gas station by referring to the displayed navigation screen for fueling the vehicle.

Here, for a vehicle using a motor which is driven based on power supplied from a battery as a drive source, it is performed not only introducing the charging facility for charging the battery in the vicinity of the vehicle, but introducing specifically the charging facility for performing efficient charging. For example, Japanese Patent Application Publication No. H10-170293 (see pp. 5 to pp. 7, FIG. 3) describes a technique to identify, out of plural charging facilities located on a guidance route to a destination, the charging facility where charging should be performed so that the number of times of charging the vehicle becomes minimum and the charging amount of every charging becomes even, and introduce the identified charging facility.

Document US 5 815 824 discloses a navigation system that checks the remaining charge of the battery and plans the step at a station if the destination cannot be reached.

Here, in the vehicle using a motor which is driven based on power supplied from a battery as the drive source, the charging time required for charging the battery is quite long as compared to the fueling time of a gasoline-powered vehicle. Therefore, there is a problem that, when the driver stops by at the charging facility on the way of traveling to the destination to charge the battery, the time of arrival at the destination becomes late.

On the other hand, in recent years it is also considered a technique to prolong the cruising distance longer than before by mounting a plurality of batteries in a vehicle and switch over the batteries while traveling. However, when a plurality of batteries are mounted in a vehicle, it has been difficult to determine an appropriate charging schedule for performing efficient charging.

The present invention is made to solve the above-described conventional problems, and it is an object of the present invention to provide a traveling guidance system, a traveling guidance method, and a computer program which are capable of introducing, in a vehicle having a plurality of batteries, the charging facility which is most suitable as a place to leave a battery, thereby allowing to perform efficient charging, when a new charging method to leave and request charging of a battery at a charging facility is adopted.
This object is achieved by a traveling guidance system according to claim 1, a traveling guidance method according to claim 5 and a program according to claim 6. Further developments of the invention are given in the dependent claims.

With a traveling guidance system according to a first aspect of the present invention, by adopting a new charging method to leave and request charging of an on-vehicle battery at a charging facility, and introducing the most suitable charging facility as a place to leave the on-vehicle battery, it becomes possible to perform efficient charging in a vehicle having a plurality of on-vehicle batteries. For example, the waiting time for charging a battery at the charging facility can be reduced.

Further, with a traveling guidance system according to the first aspect, it becomes possible to introduce the charging facility that makes it possible to complete round-trip traveling from the charging facility to a destination with one of the on-vehicle batteries which is not left at the charging facility being a power supply source.

Further, with a traveling guidance system according to the first aspect, an on-vehicle battery no longer used for traveling in the vehicle can be determined as an on-vehicle battery to be left at the charging facility. Thus, when there is a battery that is most suitable to be left when the vehicle arrives at the charging facility, it is possible to select this charging facility as the charging facility to be introduced.

Further, with a traveling guidance system according to the first aspect, since the charging facility for requesting charging is selected from charging facilities located along a guidance route from the traveling start position to the destination, it is possible to introduce the charging facility where one of the on-vehicle batteries can be left without deviating from the guidance route. As a result, the on-vehicle battery of the vehicle can be charged without deviating from the route.

Further, with a traveling guidance method according to a second aspect, by adopting the new charging method to leave and request charging of an on-vehicle battery at a charging facility, and introducing the most suitable charging facility as a place to leave the on-vehicle battery, it becomes possible to perform efficient charging in a vehicle having a plurality of on-vehicle batteries. For example, the waiting time for charging a battery at the charging facility can be reduced.

Moreover, with a computer program according to a third aspect, by adopting the new charging method to leave and request charging of an on-vehicle battery at a charging facility, and causing a computer to introduce the most suitable charging facility as a place to leave the on-vehicle battery, it becomes possible to perform efficient charging in a vehicle having a plurality of on-vehicle batteries. For example, the waiting time for charging a battery at the charging facility can be reduced.

Further features and usabilities follow from the description of embodiments referring to the drawings, of which:

FIG. 1 is a schematic structural diagram of a vehicle control system according to an embodiment;
FIG. 2 is a schematic structural diagram of a battery unit according to this embodiment;
FIG. 3 is a block diagram schematically showing a control system of the vehicle control system according to this embodiment;
FIG. 4 is an explanatory diagram describing a conventional charging system;
FIG. 5 is an explanatory diagram describing a charge requesting system according to this embodiment;
FIG. 6 is a flowchart of a charging facility introduction processing program according to this embodiment;
FIG. 7 is a flowchart of the charging facility introduction processing program according to this embodiment;
FIG. 8 is a flowchart of the charging facility introduction processing program according to this embodiment;
FIG. 9 is a schematic diagram showing an example of a charging facility candidate for which an introduction candidate flag 1 is set to ON;
FIG. 10 is a schematic diagram showing an example of a charging facility candidate for which an introduction candidate flag 1 is set to ON;
FIG. 11 is a schematic diagram showing an example of a charging facility candidate for which an introduction candidate flag 2 is set to ON;
FIG. 12 is a schematic diagram showing an example of a charging facility candidate for which an introduction candidate flag 3 is set to ON;
FIG. 13 is a diagram showing an example of selecting a charging facility to be introduced from charging facility candidates; and
FIG. 14 is a diagram showing an example of selecting a charging facility to be introduced from charging facility candidates.

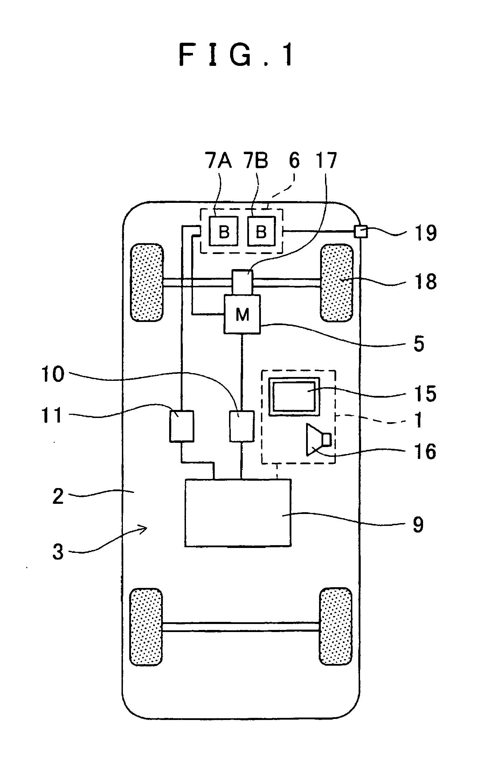

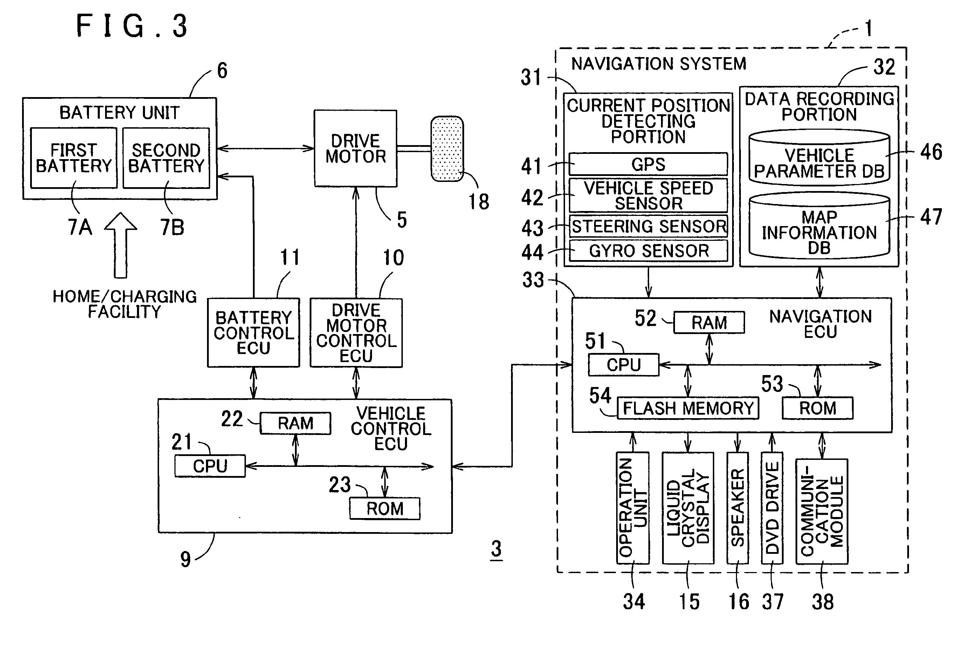

First, a schematic structure of a vehicle control system 3 of a vehicle 2 having a navigation system 1 as an on-vehicle device will be described using FIG. 1 and FIG. 3. FIG. 1 is a schematic structural diagram of the vehicle control system 3, and FIG 3 is a block diagram schematically showing the control system of the vehicle control system 3 according to this embodiment. Here, the vehicle according to this embodiment has a plurality of batteries which can be used as a power supply source to a drive motor, and uses the plurality of on-vehicle batteries as a power supply source to the drive source. As the vehicle using a plurality of batteries as a power supply source, there are electric vehicles using only a motor as the drive source and hybrid vehicles using a motor and an combustion engine in combination as the drive source, but in the embodiment described below an electronic vehicle is used.

As shown in FIG. 1 and FIG. 3, the vehicle control system 3 according to this embodiment is basically made up of the navigation system 1 installed in the vehicle 2, a drive motor 5, a battery unit 6 having a plurality of batteries (there are two in this embodiment, a first battery 7A and a second battery 7B), a vehicle control ECU 9, a drive motor control ECU 10, and a battery control ECU 11.

Here, the navigation system 1 has a liquid crystal display 15 mounted in a center console or a panel face in the cabin of the vehicle 2 to display a map around the vehicle and a guidance route to a destination, a speaker 16 outputting an audio guidance related to a route guidance, and so on. The navigation system 1 identifies the current position of the vehicle 2 by using a Global Positioning System (GPS) or the like, and performs, when a destination is set, a route search to the destination and a guidance according to a set route using the liquid crystal display 15 and/or the speaker 16. Further, in the navigation system 1 according to this embodiment, when amounts of energy in the first battery 7A and the second battery 7B for traveling to the destination set in the navigation system 1 are insufficient as will be described later, a charging facility suitable for charging the first battery 7A and the second battery 7B is introduced using the liquid crystal display 15 and/or the speaker 16. Note that the detailed structure of the navigation system 1 will be described later.

Further, the drive motor 5 is a motor which rotates based on power supplied from the first battery 7A or the second battery 7B, and is used as the drive source of the vehicle 2. The drive motor is driven by power supplied from the first battery 7A or the second battery 7B, and generates drive motor torque which is torque of the drive motor 5. The generated drive motor torque is then outputted to driving wheels 18 via a gear unit 17 such as a differential gear, thereby driving the vehicle 2.
Furthermore, when braking is needed or the vehicle is stopped by braking, the drive motor 5 functions as a regenerative brake to regenerate vehicle inertial energy as electric energy.

Further, the battery unit 6 includes a plurality of batteries (two in this embodiment: the first battery 7A and the second battery 7B) and a switch unit which switches a power supply target between the batteries 7A, 7B. Here, the first battery 7A and the second battery 7B are a secondary battery as a storage unit capable of repeating charging and discharging, and a lead-acid battery, a nickel-cadmium battery, a nickel-hydrogen battery, a lithium ion battery, a sodium-sulfur battery, or the like is used as the first battery 7A and the second battery 7B.

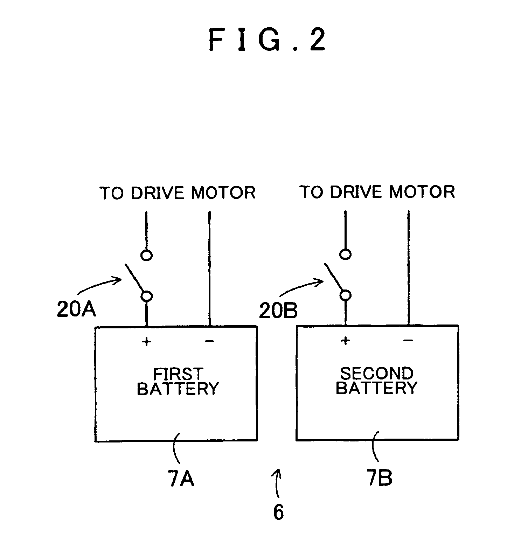

Further, the switch unit is a unit to switch the battery as a supply source supplying power to the drive motor 5 between the first battery 7A and the second battery 7B, and is formed of, for example, changeover switches 20A, 20B shown in FIG 2. When the changeover switch 20A is in an ON state and the changeover switch 20B is in an OFF state, only the first battery 7A becomes the supply source supplying power to the drive motor 5. On the other hand, when the changeover switch 20B is in the ON state and the changeover switch 20A is in the OFF state, only the second battery 7B becomes the supply source supplying power to the drive motor 5. The changeover switches 20A, 20B are controlled by the battery control ECU 11. Further, the battery control ECU 11 basically performs control so that when the SOC value (remaining energy amount of battery) of the battery that is currently the power supply source (the first battery 7A for example) turns to substantially zero, the power supply source is switched to the other battery (the second battery 7B for example).

Furthermore, the battery unit 6 is connected to a charge connector 19 provided on a side wall of the vehicle 2. By connecting the charge connector 19 to a power supply source such as a wall socket at home or in a charging facility having predetermined charge equipment, the first battery 7A and the second battery 7B can be charged. Moreover, the first battery 7A and the second battery 7B are also charged by regenerated power from the drive motor or power generated in a generator.

Further, the first battery 7A and the second battery 7B included in the battery unit 6 are each removable independently from the vehicle 2.

Further, the vehicle control ECU (electronic control unit) 9 is an electronic control unit performing control of the entire vehicle 2. Further, the drive motor control ECU 10 for controlling the drive motor 5 and the battery control ECU 11 for controlling the batteries 7A, 7B are connected to the vehicle control ECU 9, which is also connected to a navigation ECU 33, which will be described later, included in the navigation system 1.

The vehicle control ECU 9 includes a CPU 21 as an arithmetic unit as well as a control unit and internal storage devices such as a RAM 22 used as a working memory when the CPU 21 performs various arithmetic processing and a ROM 23 storing a control program and the like.

Further, the drive motor control ECU 10 and the battery control ECU 11 are each made up of a CPU, a RAM, a ROM, and so on, which are not shown, and control the drive motor 5 and the battery unit 6, respectively.

Next, the structure of the navigation system 1 will be described using FIG. 3.

As shown in FIG 3, the navigation system 1 according to this embodiment is structured from a current position detecting portion 31 detecting the current position of the vehicle 2, a data recording portion 32 recording various data, a navigation ECU (a traveling start position obtaining unit, a destination obtaining unit, a charging facility candidate position obtaining unit, a remaining amount calculating unit, a facility selecting unit, a charging facility introducing unit, a round-trip usable energy amount estimating unit, a round-trip required energy amount estimating unit, a required energy amount estimating unit, a battery remaining amount determining unit, and a route search unit) 33 performing various arithmetic processing based on inputted information, an operation unit 34 accepting an operation from the user, a liquid crystal display 15 displaying a map around the vehicle and an introduction of charging facilities for the user, a speaker 16 outputting an audio guidance related to a route guidance and an introduction of charging facilities, a DVD drive 37 reading a DVD that is a recording medium storing a program, and a communication module 38 performing communication with an information center such as a probe center or a VICS center.

The components forming the navigation system 1 will be described below in order.

The current position detecting portion 31 is structured from a GPS 41, a vehicle speed sensor 42, a steering sensor 43, a gyro sensor 44, and so on, and is capable of detecting the current position and direction of the vehicle 2, the traveling speed of the vehicle 2, the current time, and so on. Here, particularly the vehicle speed sensor 42 is for detecting the traveling distance and the speed of the vehicle 2. The vehicle speed sensor 42 generates pulses according to the revolution of the driving wheels of the vehicle 2, and outputs a pulse signal to the navigation ECU 33. The navigation ECU 33 then counts the generated pulses to calculate the rotation speed of the driving wheels and the traveling distance. It is not necessary for the navigation system 1 to have all the above five types of sensors. The navigation system 1 may be structured including only one or more types of sensors out of the above five types of sensors.

Further, the data recording portion 32 includes a hard disk (not shown) as an external storage device and as a recording medium, and a recording head (not shown) that is a driver for reading a vehicle parameter DB 46, a map information DB 47, a predetermined program or the like recorded in the hard disk and writing predetermined data in the hard disk.

Here, the vehicle parameter DB 46 is a database (DB) storing various parameters related to the vehicle 2. Specifically, this DB stores a frontal projected area A [$m^2$], a drive mechanism inertial weight Wr [kN], a vehicle weight M [kg], a rolling resistance coefficient $\mu r$ of drive wheels, an air resistance coefficient $\mu l$, a cornering resistance Rc [kN], and so on. Further, regarding the vehicle weight M, there are stored separately the weight when both the first battery 7A and the second battery 7B are mounted and the weight when only one of the first battery 7A and the second battery 7B is mounted. The vehicle parameters are used for estimating, by the navigation ECU 33 as will be described later, the energy consumption consumed by the drive motor 5 when the vehicle 2 travels to the destination or the charging facility. Further, the vehicle parameter DB 46 also stores the charging rate when the batteries 7A, 7B are charged. In this embodiment, the charging rate is a fixed value irrespective of the location and the type of the charging facility where charging is performed. In addition, the charging rate of each charging facility may be stored in the map information DB 47, which will be described later.

Here, the map information DB 47 stores various map data needed for route guidance, traffic information guidance, and map display. Specifically, the data include facility data related to facilities such as restaurants and parking lots, link data related to road (link) shapes, node data related to node points, intersection data related to intersections, search data for a route search, search data for a point search, image display data for drawing images of a map, a road, traffic information, and the like on the liquid crystal display 15, and so on. Further, the navigation system 1 according to this embodiment also records charging facility information related to charging facilities. Here, the charging facility refers to a supply facility having dedicated charging equipment for supplying power to the battery that is a power supply source to the drive source, and for example, an automobile charging station, a gas station, a shopping center correspond thereto. Furthermore, at the charging facility, it is possible for a user to leave and request charging of a battery (hereinafter referred to as "charge requesting system"). In this charge requesting system, by leaving at the charging facility a battery with a reduced SOC value out of the plurality of batteries provided in the vehicle 2, it is possible to have the left battery charged in the time period that the vehicle 2 goes to a destination and comes back again to the charging facility. Using this charge requesting system, the user no longer needs to wait at the charging facility while the battery is charged. Note that details of this charge requesting system will be described later.

Further, the charging facility information stored in the map information DB 47 includes position coordinates of charging facilities, facility names, opening hours of charging facilities, and so on. Based on the charging facility information, the navigation ECU 33 selects the charging facility that is suitable for leaving the first battery 7A and the second battery 7B as will be described later.

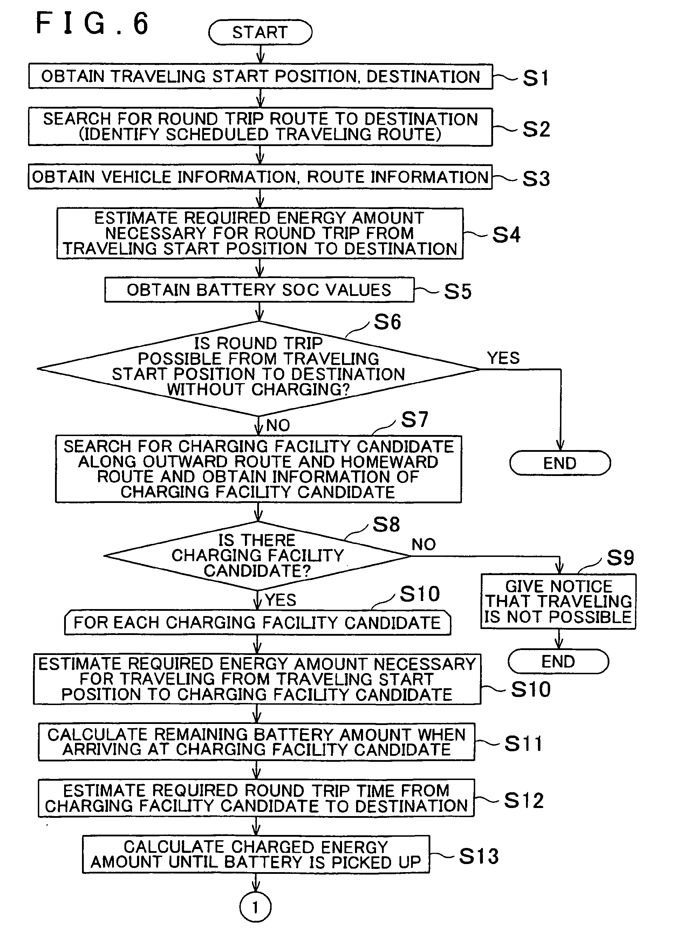

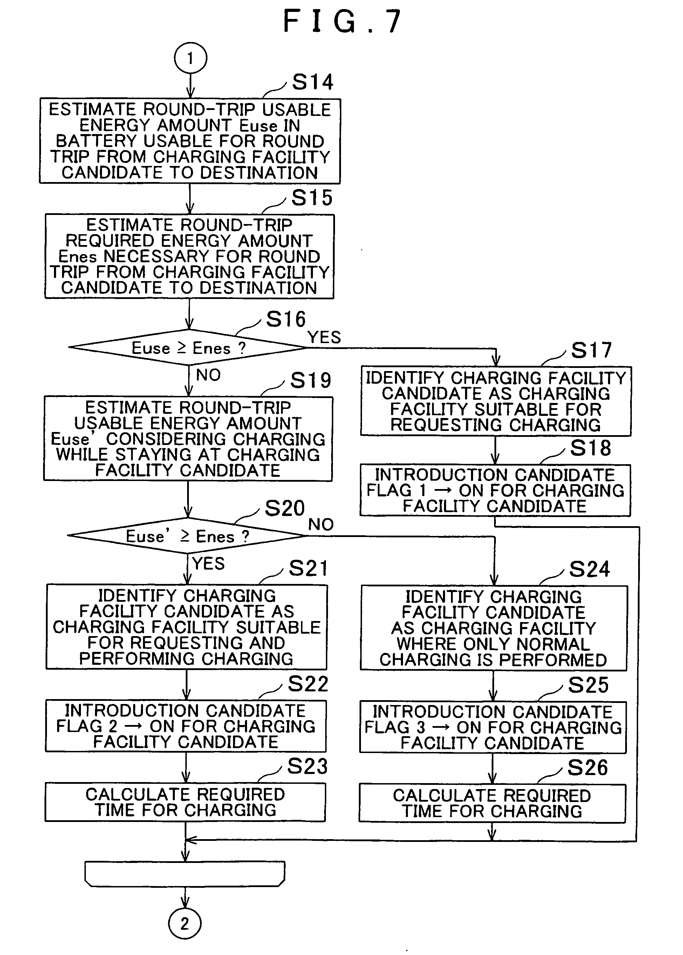

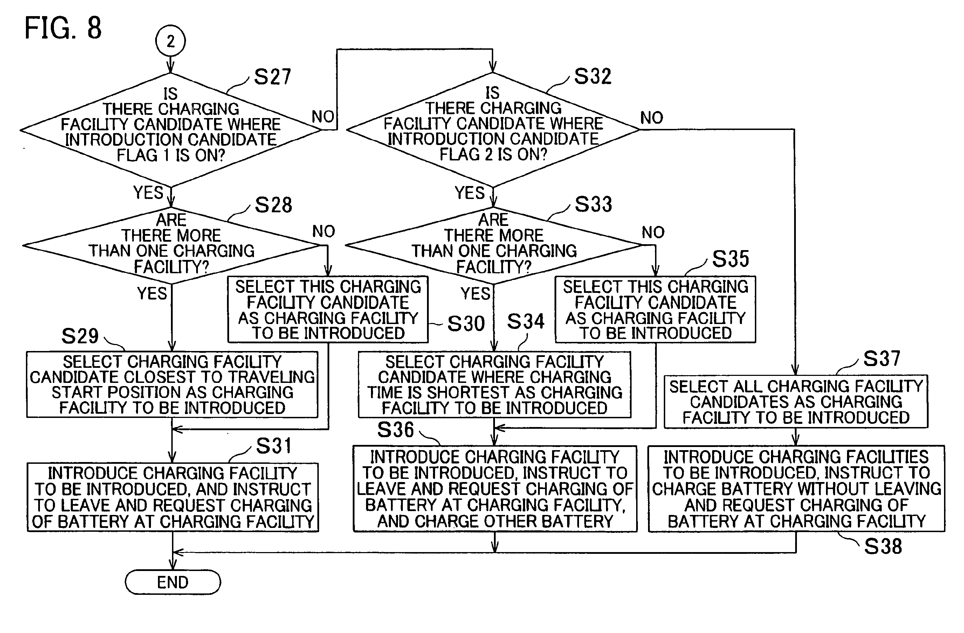

On the other hand, the navigation ECU (Electronic Control Unit) 33 is an electronic control unit performing control of the entire navigation system 1, and this control includes guidance route setting processing to set, when the destination is selected, a guidance route from a traveling start position to a destination, and charging facility candidate search processing to search for charging facilities, which are located along an outward route and a homeward route from the traveling start position to the destination of the vehicle, and where it is possible for the user to stop by while traveling on the outward route and the homeward route, and to leave and request charging of one of the batteries 7A, 7B (hereinafter referred to as charging facility candidates), when the amounts of energy of the first battery 7A and the second battery 7B are insufficient for traveling to the destination set in the navigation system 1. The control also includes charging facility selection processing to select the charging facility (hereinafter referred to as a charging facility to be introduced) that is suitable for leaving and requesting charging of the first battery 7A or the second battery 7B out of the detected charging facility candidates, charging facility introduction processing to introduce the selected charging facility to be introduced using the liquid crystal display 15 and the like, and so on. The navigation ECU 33 includes a CPU 51 as an arithmetic processing unit as well as a control unit, and internal storage devices such as a RAM 52 that is used as a working memory when the CPU 51 performs various arithmetic processing, and that stores route data and so on when a route is searched for, a ROM 53 storing a control program, a charging facility introduction processing program (see FIG. 6 to FIG. 8), and so on, and a flash memory 54 storing a program read from the ROM 53.

The operation unit 34 is operated when inputting the traveling start position as a guidance start point and the destination as a guidance end point, or the like, and is made up of plural operation switches (not shown) such as various keys, and buttons. The navigation ECU 33 performs, based on switch signals outputted by pressing down the various switches or the like, control to carry out various corresponding operations. The operation unit 34 may also be formed of a touch panel provided on a front face of the liquid crystal display 15.

Further, the liquid crystal display 15 displays a map image including roads, traffic information, an operation guidance, an operation menu, a key guidance, a guidance route from the current position to the destination, guidance information along the guidance route, news, a weather forecast, time, e-mails, a television program, and/or the like. The liquid crystal display 15 also displays an introduction of the charging facility suitable for charging the first battery 7A or the second battery 7B of the vehicle 2.

Further, the speaker 16 outputs an audio guidance for guiding the route along a guidance route or a traffic information guidance based on instructions from the navigation ECU 33. The speaker 16 also outputs an introduction of the charging facility suitable for charging the first battery 7A or the second battery 7B of the vehicle 2.

Further, the DVD drive 37 is a drive capable of reading data recorded in a recording medium such as a DVD or a CD. An update of the map information DB 47 or the like is performed based on read data.

Further, the communication module 38 is a communication device for receiving traffic information including traffic jam information, restriction information, parking information, traffic accident information, and so on transmitted from a traffic information center, for example, a Vehicle Information and Communication System center (VICS (registered trademark)), or a probe center. Further, for example, a cellular phone, or a DCM corresponds to the communication module 38. In this embodiment, it is also possible to obtain charging facility information from an external information center via the communication module 38.

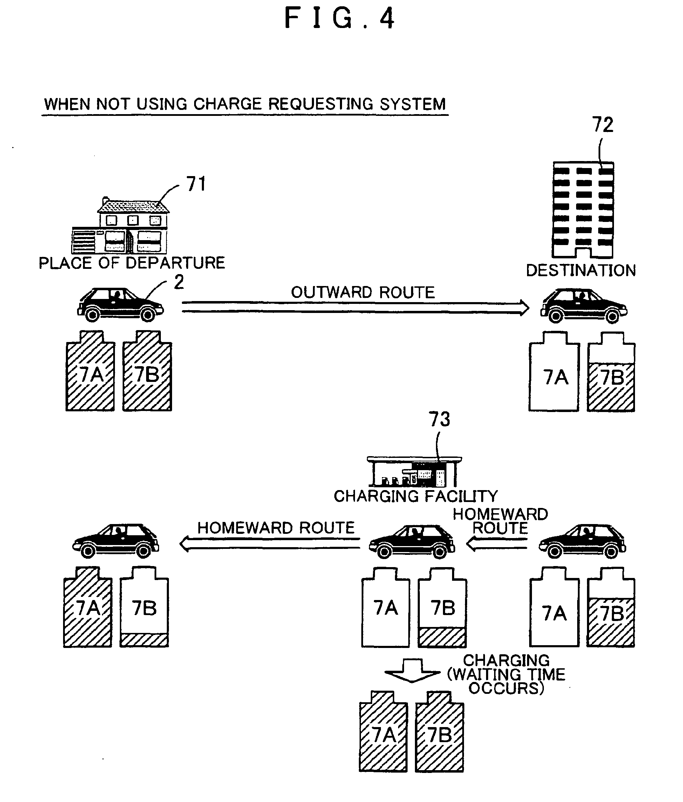

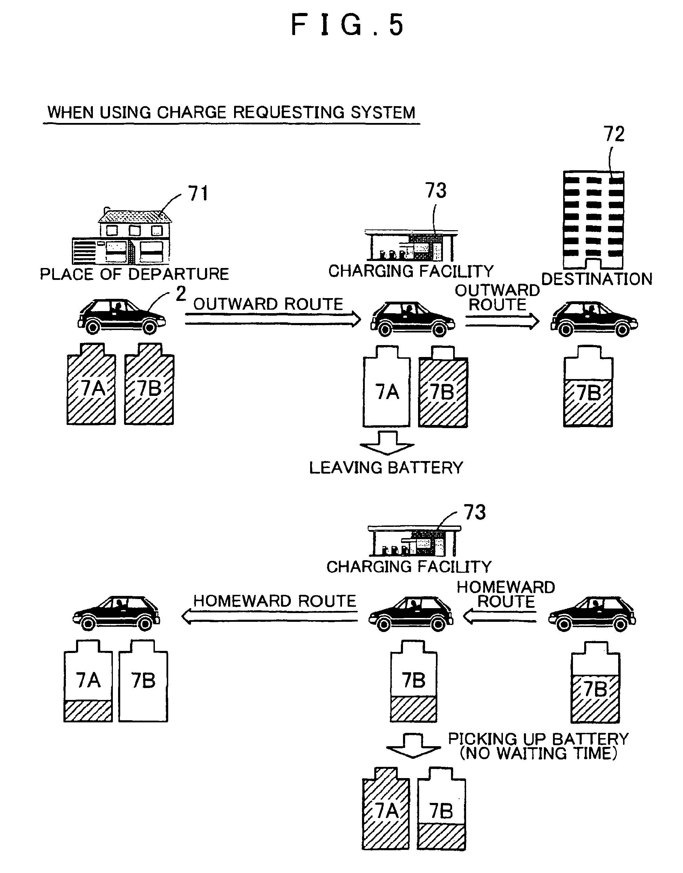

Next, details of the charge requesting system will be described using FIG. 4 and FIG. 5.

Here, FIG. 4 and FIG. 5 both describe a situation that, for example, when the vehicle 2 makes a round trip from a place of departure 71 to a destination 72, the energy amount is insufficient for traveling a round trip route to the destination 72 even when the first battery 7A and the second battery 7B are both in a fully charged state.

First, the case where the charge requesting system is not used under the above situation will be described using FIG. 4. When the charge requesting system is not used, it is necessary to stop by at the charging facility either while traveling on an outward route to the destination 72 or while traveling on a homeward route from the destination 72, so as to charge the batteries 7A, 7B.

For example, as shown in FIG. 4, when the vehicle 2 stops by at the charging facility 73 located on a traveling route while traveling on the homeward route for charging the batteries, the user has to wait at the charging facility 73 while charging the batteries 7A, 7B at the charging facility 73. As a result, a waiting time occurs at the charging facility 73.

Next, the case where the charge requesting system is used under the above situation will be described using FIG. 5. When the charge requesting system is used, the user needs to stop by at the charging facility along the outward route while traveling on the outward route to the destination 72 so as to leave and request charging of the first battery 7A or the second battery 7B, and thereafter the user needs to stop by at the same charging facility while traveling on the homeward route from the destination 72 so as to pick up the first battery 7A or the second battery 7B which was left.

For example, it is assumed that, as shown in FIG. 5, the vehicle 2 stops by at the charging facility 73 along the outward route while traveling on the outward route so as to leave and request charging of the first battery 7A with a substantially low or zero SOC value at this moment. The vehicle 2 can continue traveling while the first battery 7A is charged at the charging facility 73. Then, by stopping by at the charging facility 73 again while traveling on the homeward route to pick up the first battery 7A which was left and mounting the battery on the vehicle 2, the user becomes able to travel from the place of departure to the destination without occurrence of waiting time caused by charging at the charging facility 73.

Next, a charging facility introduction processing program executed by the navigation ECU 33 in the navigation system 1 having the above-described structure will be described based on FIG. 6 to FIG. 8. FIG. 6 to FIG. 8 are flowcharts of a charging facility introduction processing program according to this embodiment. Here, the charging facility introduction processing program is executed when the destination is set in the navigation system 1 and performs processing to introduce the charging facility suitable for charging the first battery 7A or the second battery 7B when the amounts of energy in the first battery 7A and the second battery 7B are insufficient for traveling the round trip route from the traveling start position to the destination set in the navigation system 1. The program shown by the following flowcharts of FIG. 6 to FIG. 8 is stored in the RAM 52 or the ROM 53 provided in the navigation system 1, and is executed by the CPU 51.

In the charging facility introduction processing program, first, in step (hereinafter abbreviated as S) 1, the CPU 51 obtains the traveling start position and the destination of the vehicle 2. In this embodiment, it is assumed that the traveling start position is the current position of the vehicle 2. Therefore, the CPU 51 obtains the current position of the vehicle 2 by the current position detecting portion 31. Further, map matching is performed for identifying the obtained current position of the vehicle 2 on the map. On the other hand, the destination is a destination currently set in the navigation system 1, and the CPU 51 obtains the destination of the vehicle by reading the information related to the currently set destination from the RAM 52. Above-described S 1 corresponds to processing performed by the traveling start position obtaining unit and the destination obtaining unit.

Next, in S2, the CPU 51 searches for an outward route from the traveling start position (current position of the vehicle 2) to the destination and a homeward route from the destination to the traveling start position based on the link data and node data stored in the map information DB 47, the traffic information (traffic jam, traffic restriction, and so on) obtained from the VICS center, and the like. Then the CPU 51 identifies a guidance route (namely, a scheduled traveling route) made up of the outward route and the homeward route based on results of the route search. The route search processing is performed using known Dijkstra's algorithm. In addition, the outward route and the homeward route may be different routes. Further, above-described S2 corresponds to processing performed by the route search unit.

Subsequently in S3, the CPU 51 reads the vehicle parameter DB 46 and obtains various parameter information related to the vehicle 2. Specifically, the CPU 51 obtains the frontal projected area A [m$^2$], the drive mechanism inertial weight Wr [kN], the vehicle weight M [kg], the rolling resistance coefficient $\mu$r of drive wheels, the air resistance coefficient $\mu$l, the cornering resistance Rc [kN], and so on. Regarding the vehicle weight M, there are obtained the weight when both the first battery 7A and the second battery 7B are mounted and the weight when only one of the first battery 7A and the second battery 7B is mounted.

Furthermore, in S3 the CPU 51 obtains route information of the entire scheduled traveling route identified in S2. Here, the route information to be obtained include information related to intersections (including information related to positions, presence of traffic signals, and the numbers of lanes) located on the scheduled traveling route, information related to inclined sections (including information related to inclination angle (gradient or the like)), information related to curves (including information related to start points, end points, and turning radii), traffic jam information (start points of traffic jam, traffic jam lengths, degrees of traffic jam, and average vehicle speeds of respective links forming the scheduled traveling route), and so on. These types of route information are obtained by reading from the map information DB 47, or communicating with the probe center or the VICS center via the communication module 38.

Further, in S4, the CPU 51 estimates the amount of energy that is required for driving the drive motor 5 (hereinafter referred to as a required energy amount) when traveling the scheduled traveling route identified in S2. Here, it is generally known that the energy consumption to be consumed in the drive source (drive motor 5 in this embodiment) due to traveling of the vehicle depends on various traveling resistance generated on the vehicle such as an air resistance $Rl$, a rolling resistance $Rr$, a gradient resistance $Ri$, an acceleration resistance $Ro$, and so on. Here, energy consumptions $Eo$, $Er$, $El$, $Ei$ of the drive motor 5 based on the respective traveling resistances $Ro$, $Rr$, $Rl$, $Ri$ are calculated based on the vehicle information and the route information of the scheduled traveling route obtained in S3. A specific method of calculating the energy consumptions $Eo$, $Er$, $El$, $Ei$ is already known, and thus detailed description is omitted. Further, regarding the vehicle weight, the weight when both the first battery 7A and the second battery 7B are mounted is used.

The total required energy amount $E_n$ required for driving the drive motor 5 when traveling on the scheduled traveling route is expressed by the following equation (1) considering the energy amount $Ere$ of the regenerated energy that is estimated to be stored in the battery 7 while traveling on the scheduled traveling route.

$$E_n = Eo + Er + El + Ei - Ere \ldots (1)$$

The energy amount $Ere$ of the regenerated energy is calculated considering downhill roads and points (intersections, curves, traffic jam areas) where braking is expected, which are located on the scheduled traveling route, based on the route information of the scheduled traveling route obtained in S3.

In S5, the CPU 51 obtains the SOC values of the first battery 7A and the second battery 7B mounted in the vehicle 2 from the battery control ECU 11.

In S6, the CPU 51 determines whether or not it is possible to make a round trip from the traveling start position to the destination without charging the batteries 7A, 7B at a charging facility on the way, by comparing the SOC values obtained in S5 with the required energy amount estimated in S4. Specifically, it is determined that it is possible to make a round trip from the traveling start position to the destination without charging the batteries 7A, 7B at a charging facility on the way when the sum of the SOC values of the first battery 7A and the second battery 7B is equal to or more than the required energy amount estimated in S4.

When it is determined that it is possible to make a round trip from the traveling start position to the destination without charging the batteries 7A, 7B at a charging facility on the way as a result of the determination in S6 (S6: YES), the charging facility introduction processing program is finished without performing introduction. On the other hand, when it is determined that it is not possible to make a round trip from the traveling start position to the destination without charging the batteries 7A, 7B at a charging facility on the way (S6: NO), the process proceeds to S7.

In S7, based on the map information DB 47, the CPU 51 searches for charging facilities which are located along the outward route and the homeward route on the scheduled traveling route identified in S2 and where the vehicle can stop by while traveling on the outward route and the homeward route. Then the CPU 51 identifies all the charging facilities detected as a result of searching as charging facility candidates where the battery can be left for requesting charging. Furthermore, various information (position information and the like) related to the identified charging facility candidates are obtained from the map information DB 47. Above-described S7 corresponds to processing performed by the charging facility candidate position obtaining unit.

In addition, those corresponding to the "charging facilities located along the outward route and the homeward route" are facilities facing both the link forming the outward route and the link forming the homeward route, facilities within a predetermined distance from both the link forming the outward route and the link forming the homeward route, or the like.

In S8, the CPU 51 determines whether or not there is at least one or more charging facilities to be a charging facility candidate based on the search result obtained in above-described S7. When it is determined that there is one or more charging facility candidates (S8: YES), the CPU 51 proceeds to S10. On the other hand, when it is determined that no charging facility candidate exists (S8: NO), that is, it is determined that no charging facility exists on the scheduled traveling route, the CPU 51 proceeds to S9.

In S9, using the liquid crystal display 15 and/or the speaker 16, the CPU 51 gives notice that no charging facility where the batteries 7A, 7B can be charged exists and a round trip to the destination is not possible. Further, the CPU 51 may make a suggestion to change the destination or have a spare battery. Moreover, when the first battery 7A and the second battery 7B are currently not fully charged, the CPU 51 may make a suggestion to charge the batteries before starting traveling. Thereafter, the charging facility introduction processing program is finished.

Here, the processing of S10 to S26 below is performed targeting at each of all the charging facility candidates detected in S7. Specifically, a process target is selected in order from the charging facility candidate that is closest to the traveling start position, and the processing of S 10 to S26 below is performed.

In S10, first, the CPU 51 estimates the required energy amount which is required for traveling from the traveling start position to the charging facility candidate as the process target. The estimation method of the required energy amount is the same as in S4 and hence is omitted. In addition, above-described S10 corresponds to processing performed by the required energy amount estimating unit.

Next, in S11, the CPU 51 calculates the SOC values of the first battery 7A and the second battery 7B when the vehicle arrives at the charging facility candidate as the process target based on the SOC values obtained in above-described S5 and the required energy amount estimated in S 10. Above-described S11 corresponds to processing performed by the remaining amount calculating unit.

Thereafter, in S 12 the CPU 51 estimates a required round-trip time that is necessary for making a round trip from the charging facility candidate as the process target to the destination. Specifically, there is estimated, as the required round-trip time, the total time of respective average traveling times of links forming the scheduled traveling route and a scheduled time of stay at the destination. The average traveling times are obtained from the map information DB 47.

Next, in S13, the CPU 51 estimates the chargeable energy amount which can be charged from the time the first battery 7A or the second battery 7B is left at the charging facility candidate as the process target until the left battery is picked up. Specifically, the smaller value is estimated as the chargeable energy amount, out of "a value obtained by multiplying the charge rate (Wh/hour) in the charging facility by the required round-trip time estimated in S12" and "a value obtained by subtracting the SOC value when the battery is left from the maximum capacity of the left battery" (in the case of the same value, the same value is taken). In addition, in this embodiment, the charging rate is a fixed value irrespective of the location and the type of the charging facility where charging is performed, and the CPU 51 obtains the value of the charging rate by reading from the vehicle parameter DB 46. On the other hand, when the charging rate is different depending on the location and the type of the charging facility, it is arranged to obtain the charging rate of each facility.

Subsequently, in S14, the CPU 51 estimates a round-trip usable energy amount $E_{use}$ which is usable in the drive motor 5 while making a round trip from the charging facility candidate to the destination if the first battery 7A or the second battery 7B is left at the charging facility candidate as the process target. Specifically, a smaller value is estimated as the round-trip usable energy amount $E_{use}$ out of "a value obtained by adding the chargeable energy amount estimated in above-described S13 to the total value of the SOC values of the first battery 7A and the second battery 7B at the time of arrival at the charging facility candidate as the process target, and subtracting from the added value the energy amount required for traveling the homeward route from the charging facility candidate as the process target to the traveling start position" and "the SOC value of the battery that is not to be left when arriving at the charging facility candidate on the outward route" (in the case of the same value, the same value is taken). In addition, the method of estimating the energy amount required for traveling the homeward route from the charging facility candidate to the traveling start position is the same as in above-described S4 and hence is omitted. Above-described S 14 corresponds to processing performed by the round-trip usable energy amount estimating unit.

In addition, in above-described S 14, the round-trip usable energy amount $E_{use}$ is calculated also considering the energy amount required for traveling back to the traveling start position after one of the batteries 7A, 7B is picked up at the charging facility candidate. Therefore, when the round-trip usable energy amount $E_{use}$ surpasses a round-trip required energy amount $E_{nes}$, which will be described later, it means that it is possible to complete a round trip from the traveling start position to the destination.

Furthermore, in S15, the CPU 51 estimates the round-trip required energy amount $E_{nes}$ that is necessary for making a round trip from the charging facility candidate as the process target to the destination. In addition, the method of estimating the round-trip required energy amount $E_{nes}$ is the same as in above-described S4 and hence is omitted. However, when calculating the round-trip required energy amount $E_{nes}$ in above-described S 15, regarding the vehicle weight, the weight when only either of the first battery 7A or the second battery 7B which is not left at the charging facility candidate as the process target is mounted is used. Above-described S 15 corresponds to processing performed by the round-trip required energy amount estimating unit.

Next, in S16, the CPU 51 determines whether or not the round-trip usable energy amount $E_{use}$ is equal to or more than the round-trip required energy amount $E_{nes}$ by comparing the round-trip usable energy amount $E_{use}$ estimated in above-described S14 with the round-trip required energy amount $E_{nes}$ estimated in above-described S 15.

When it is determined that the round-trip usable energy amount $E_{use}$ is equal to or more than the round-trip required energy amount $E_{nes}$ as a result of determination in above-described S16 (S16: YES), the CPU 51 proceeds to S 17. On the other hand, when it is determined that the round-trip usable energy amount $E_{use}$ is smaller than the round-trip required energy amount $E_{nes}$ (S16: NO), the CPU 51 proceeds to S 19.

In S 17, the CPU 51 identifies the charging facility candidate as the process target as one of the charging facilities suitable for the vehicle 2 to leave and request charging of one of the batteries 7A, 7B only.

Then in S18, the CPU 51 sets an introduction candidate flag 1 to ON for the charging facility candidate as the process target. The introduction candidate flag 1, and an introduction candidate flag 2 and an introduction candidate flag 3, which will be described later, are stored in the RAM 52.

In addition, the case where the introduction candidate flag 1 is turned on for the charging facility candidate as the process target in above-described S18 is a situation satisfying the condition that traveling is possible with the drive motor 5 to the traveling start position by leaving and requesting charging of the first battery 7A or the second battery 7B at the charging facility while traveling on the outward route to the destination, and by picking up and mounting in the vehicle the first battery 7A or the second battery 7B at the charging facility while traveling on the homeward route from the destination, without any other charging in addition to the charging at the charging facility.

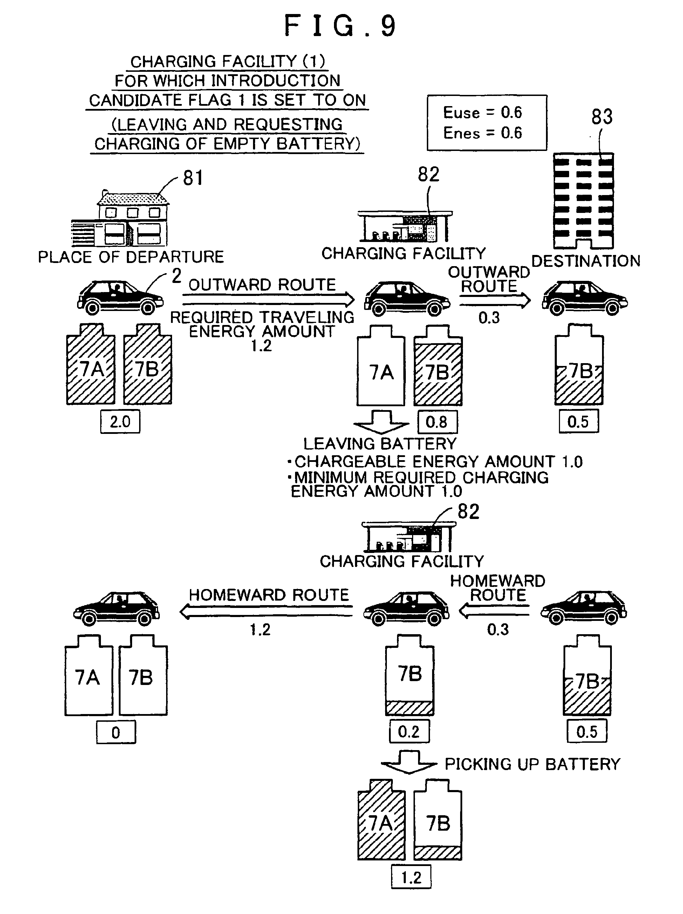

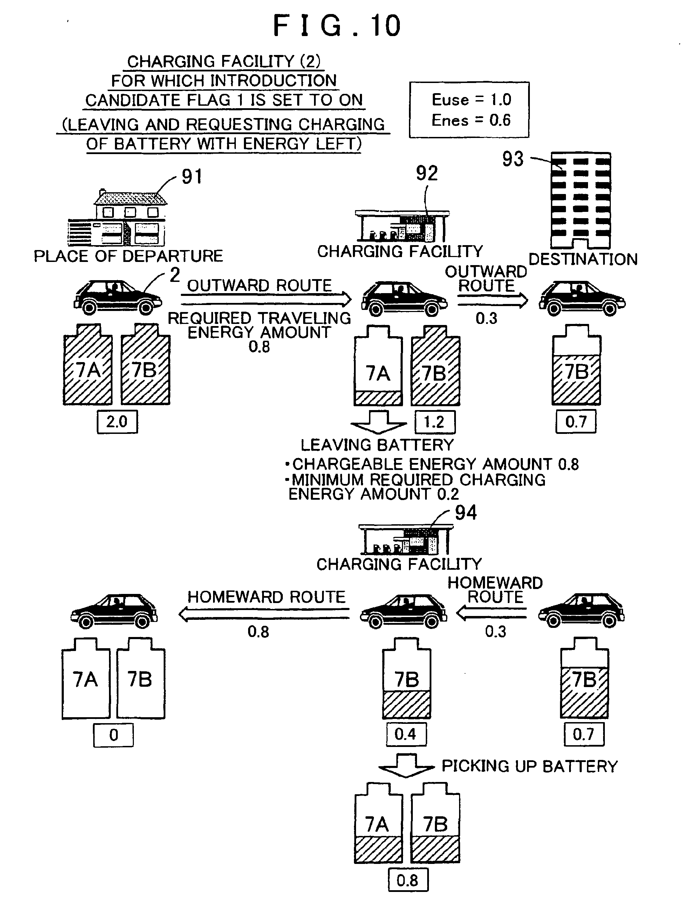

Here, an example satisfying the above condition will be described using FIG. 9 and FIG. 10. In the following example, the capacities of the first battery 7A and the second battery 7B are the same, and the energy amount when fully charged is 1.0 for both of the batteries.

For example, in the example shown in FIG. 9, the SOC value in total of the batteries 7A, 7B before starting traveling is 2.0. The required traveling energy amount from a place of departure 81 to a charging facility candidate 82 as the process target is 1.2. The required traveling energy amount from the charging facility candidate 82 to the destination 83 is 0.3. The chargeable energy amount that can be charged from the time the first battery 7A is left at the charging facility candidate 82 until the first battery 7A is picked up is 1.0. In the situation shown in FIG. 9, the round-trip usable energy amount $E_{use}$ estimated in S14 is 0.6. Further, the round-trip required energy amount $E_{nes}$ estimated in above-described S15 is 0.6 (that is, S16: YES).

Therefore, the vehicle 2 becomes capable of making a round trip from the place of departure 81 to the destination 83 by leaving the first battery 7A with an SOC value of substantially zero at the charging facility candidate 82 and requesting charging thereof with energy amount of 1.0, without any other charging of the battery in addition to the charging at the charging facility. From the above, in the example shown in FIG 9, the charging facility candidate as the process target is identified as the charging facility suitable for the vehicle 2 to leave and request charging of one of the batteries 7A, 7B only.

Further, in the example shown in FIG. 10, the SOC value in total of the batteries 7A, 7B before starting traveling is 2.0. The required traveling energy amount from a place of departure 91 to a charging facility candidate 92 as the process target is 0.8. The required traveling energy amount from the charging facility candidate 92 to the destination 93 is 0.3. The chargeable energy amount that can be charged from the time the first battery 7A is left at the charging facility candidate 92 until the first battery 7A is picked up is 0.8. In the situation shown in FIG 10, the round-trip usable energy amount $E_{use}$ estimated in above-described S 14 is 1.0. Further, the round-trip required energy amount $E_{nes}$ estimated in above-described S 15 is 0.6 (that is, S 16: YES).

Therefore, the vehicle 2 becomes capable of making a round trip from the place of departure 91 to the destination 93 by leaving the first battery 7A with an SOC value of 0.2 at the charging facility candidate 92 for requesting charging thereof with energy amount of 0.2 or more, without any other charging. In FIG. 10, the case where only 0.2 as the minimum required charging energy amount is requested is shown. As above, in the example shown in FIG. 10, the charging facility candidate 92 as the process target is identified as the charging facility suitable for the vehicle 2 to leave and request charging of one of the batteries 7A, 7B only.

On the other hand, in S19, the CPU 51 newly estimates a round-trip usable energy amount $E_{use}'$ considering that the vehicle stays at the charging facility candidate as the process target and charges the battery, which is not to be left, in this charging facility. Specifically, the CPU 51 calculates the round-trip usable energy amount $E_{use}'$ by calculating the difference between the maximum capacity and the SOC value when the vehicle arrives at the charging facility candidate as the process target in the battery which is not to be left, and adding the calculated difference to the round-trip usable energy amount $E_{use}$ estimated in S14.

Next, in S20, the CPU 51 compares the round-trip usable energy amount $E_{use}'$ estimated in above-described S 19 with the round-trip required energy amount $E_{nes}$ estimated in above-described S 15, so as to determine whether or not the round-trip usable energy amount $E_{use}'$ is equal to or larger than the round-trip required energy amount $E_{nes}$.

When it is determined that the round-trip usable energy amount $E_{use}'$ is equal to or larger than the round-trip required energy amount $E_{nes}$ estimated in above-described S 15 (S20: YES) due to that the vehicle stays at the charging facility candidate as the process target and that the battery which is not to be left is charged in this charging facility, the CPU 51 proceeds to S21. On the other hand, when it is determined that the round-trip usable energy amount $E_{use}'$ is lower than the round-trip required energy amount $E_{nes}$ (520: NO) estimated in above-described S15 even when the battery which is not to be left is charged at the charging facility, the CPU 51 proceeds to S24.

In S21, the CPU 51 identifies the charging facility candidate as the process target as one of the charging facilities suitable for the vehicle 2 to leave and request charging of one of the batteries 7A, 7B and also to stay and perform normal battery charging.

In S22, the CPU 51 then sets the introduction candidate flag 2 to ON for the charging facility candidate as the process target.

In addition, the case where the introduction candidate flag 2 is set to ON for the charging facility candidate as the process target in above-described S22 is a situation satisfying the condition that traveling with the drive motor 5 to the traveling start position is possible by charging the battery which is not to be left for a necessary time, which will be described later, and leaving and requesting charging of the battery which is to be left at this charging facility while traveling on the outward route to the destination, and by picking up and mounting in the vehicle the left battery at this charging facility while traveling on the homeward route from the destination.

Thereafter, in 523, the CPU 51 calculates a necessary charging time for charging the battery which is not to be left while staying at the charging facility candidate as the process target. Specifically, the CPU 51 calculates a necessary charging time for charging the battery with the energy amount to be insufficient in the round-trip usable energy amount $E_{use}$ estimated in above-described S14 with respect to the round-trip required energy amount $E_{nes}$ estimated in S15. The calculated charging time is stored in the RAM 52 or the like.

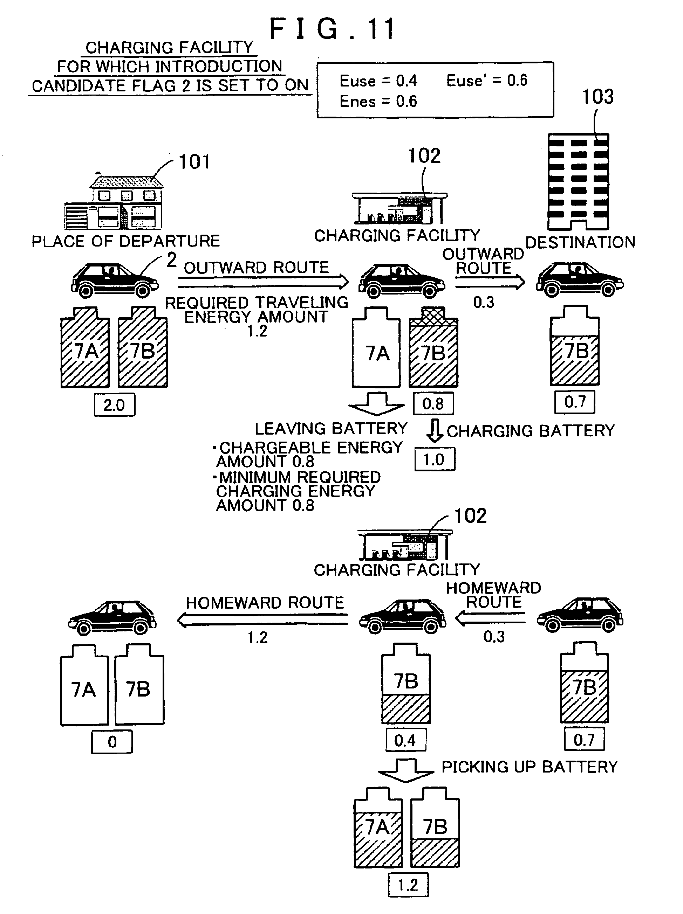

Here, an example satisfying the above condition will be described using FIG. 11.

For example, in the example shown in FIG 11, the SOC value in total of the batteries 7A, 7B before starting traveling is 2.0. The required traveling energy amount from a place of departure 101 to a charging facility candidate 102 as the process target is 1.2. The required traveling energy amount from the charging facility candidate 102 to the destination 103 is 0.3. The chargeable energy amount that can be charged from the time the first battery 7A is left at the charging facility candidate 102 until the first battery 7A is picked up is 0.8. In the situation shown in FIG. 11, the round-trip usable energy amount $E_{use}$ estimated in above-described S14 is 0.4. Further, the round-trip required energy amount $E_{nes}$ is 0.6 (that is, S16: NO). Here, the second battery 7B is charged at the charging facility candidate 102 for the charging time calculated in above-described S23, and as a result the second battery 7B is charged newly with 0.2. Thus, the round-trip usable energy amount $E_{use}'$ becomes 0.6 (that is, S20: YES).

Therefore, the vehicle 2 becomes capable of making a round trip from the place of departure 101 to the destination 103 by charging the second battery 7B with 0.2 (fully charged) and leaving the first battery 7A with an SOC value of substantially zero for requesting charging thereof with energy amount of 0.8 at the charging facility candidate 102. As above, in the example shown in FIG. 11, the charging facility candidate 102 as the process target is identified as the charging facility suitable for the vehicle 2 to leave and request charging of one of the batteries 7A, 7B and also to stay and perform normal battery charging.

On the other hand, in S24, the CPU 51 identifies the charging facility candidate as the process target as the charging facility which is not suitable for the vehicle

2 to leave and request charging of one of the batteries 7A, 7B, and where only normal battery charging is performed.

In S25, the CPU 51 then sets the introduction candidate flag 3 to ON for the charging facility candidate as the process target.

Subsequently, in S26, the CPU 51 calculates the charging time necessary for charging the batteries 7A, 7B while staying at the charging facility candidate as the process target. Specifically, the CPU 51 calculates the charging time for charging the first battery 7A and the second battery 7B with a required traveling energy amount needed for traveling back to the traveling start position from this charging facility via the destination. The calculated charging time is stored in the RAM 52 or the like.

In addition, the case where the introduction candidate flag 3 is set to ON for the charging facility candidate as the process target in above-described S25 is a situation that, if a battery is left at this charging facility while traveling on the outward route to the destination, the energy amount of the battery becomes insufficient on the way, and a round trip to the traveling start position is not possible.

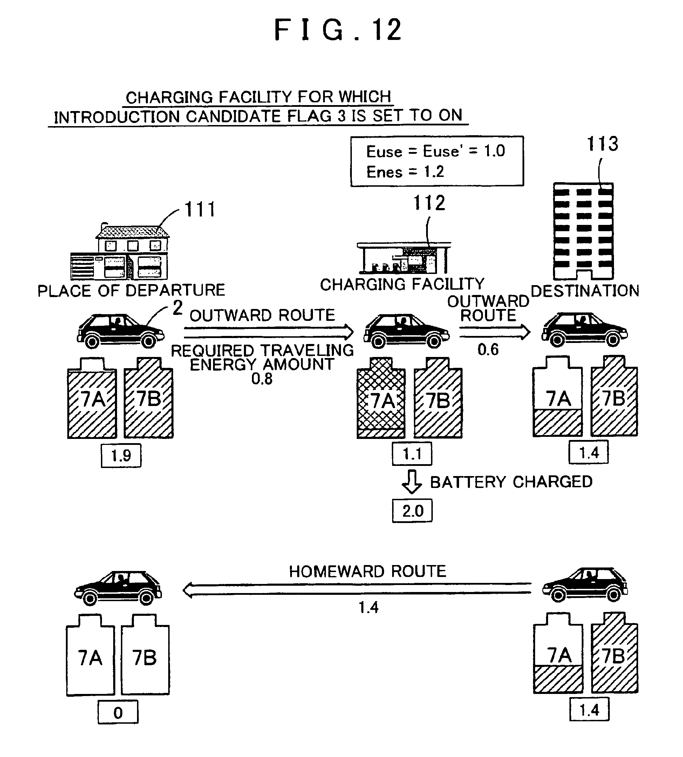

Here, an example satisfying the above condition will be described with reference to FIG. 12.

For example, in the example shown in FIG 12, the SOC value in total of the batteries 7A, 7B before starting traveling is 1.9. The required traveling energy amount from a place of departure 111 to a charging facility candidate 112 as the process target is 0.8. The required traveling energy amount from the charging facility candidate 112 to the destination 113 is 0.6. The chargeable energy amount that can be charged from the time the first battery 7A is left at the charging facility candidate 112 until the first battery 7A is picked up is 0.9. In the situation shown in FIG. 12, the round-trip usable energy amount $E_{use}$ estimated in above-described S 14 is 1.0, which is the maximum capacity of the second battery 7B. Further, the round-trip required energy amount $E_{nes}$ estimated in S15 is 1.2 (that is, S16: NO). Here, the second battery 7B is fully charged when the vehicle 2 arrives at the charging facility candidate 112 and cannot be charged any further, and thus the round-trip usable energy amount $E_{use}'$ is 1.0 (that is, S20: NO).

Therefore, without leaving the first battery 7A, the first battery 7A of the vehicle 2 is charged for the charging time calculated in S26 at the charging facility candidate 112, and as a result, the first battery 7A is charged with 0.9 (fully charged). Thus, the vehicle 2 becomes capable of making a round trip from the place of departure 111 to the destination 113. As above, in the example shown in FIG 12, the charging facility candidate 112 as the process target is identified as the charging facility which is not suitable for the vehicle 2 to leave and request charging of one of the batteries 7A, 7B, and where only normal battery charging is performed.

After the processing of above-described S10 to S26 is performed for all the charging facility candidates detected in above-described S7, the CPU 51 then proceeds to S27. On the other hand, when there is any charging facility candidate which is not processed, the CPU 51 returns to S 10 and executes the processing of S 10 to S26 targeted at the charging facility candidate which is not processed.

Then, in S27, the CPU 51 reads the introduction candidate flag 1, the introduction candidate flag 2, and the introduction candidate flag 3 set to each charging facility candidate in above-described S18, S22, S25 from the RAM 52. The CPU 51 then determines whether or not there is the charging facility candidate for which the introduction candidate flag 1 is set to ON out of all the charging facility candidates detected in S7.

When it is determined as a result that there is the charging facility candidate for which the introduction candidate flag 1 is set to ON (S27: YES), the CPU 51 proceeds to S28. On the other hand, when it is determined that there is no charging facility candidate for which the introduction candidate flag 1 is set to ON (S27: NO), the CPU 51 proceeds to S32.

In S28, the CPU 51 determines whether or not there are more than one charging facility candidate for which the introduction candidate flag 1 is set to ON. When it is determined that there are more than one charging facility candidate for which the introduction candidate flag 1 is set to ON (S28: YES), the charging facility candidate closest to the traveling start position is selected as the most suitable charging facility (charging facility to be introduced) for the vehicle 2 to leave and request charging of one of the batteries 7A, 7B only (S29).

On the other hand, when it is determined that there is only one charging facility candidate for which the introduction candidate flag 1 is set to ON (S28: NO), this charging facility candidate is selected as the charging facility (charging facility to be introduced) that is most suitable for the vehicle 2 to leave and request charging of one of the batteries 7A, 7B only (S30).

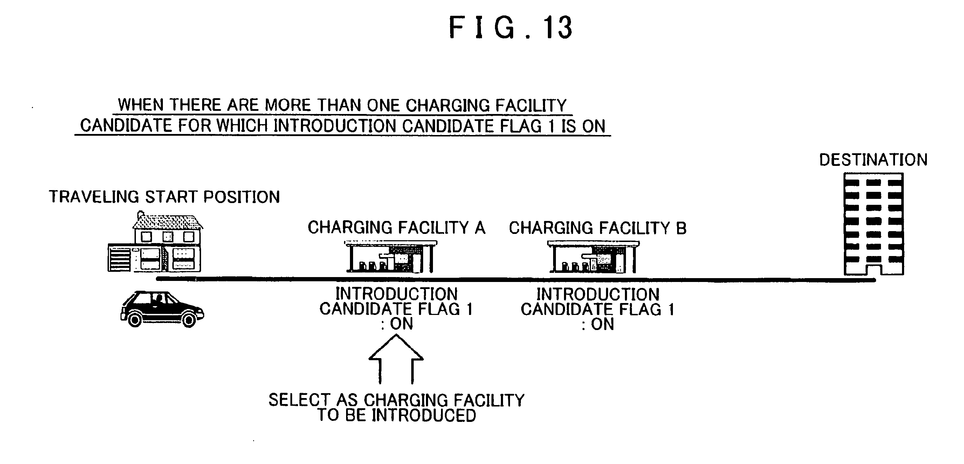

Therefore, for example, as shown in FIG 13, when a charging facility A and a charging facility B as the charging facility candidates are located along the outward route from the traveling start position to the destination, with the introduction candidate flag 1 being set to ON for both the charging facility A and the charging facility B, the charging facility A closer to the traveling start position is selected as the charging facility to be introduced. Accordingly, the vehicle can secure longer charging time. Further, the distance of traveling while carrying an unnecessary battery can be reduced.

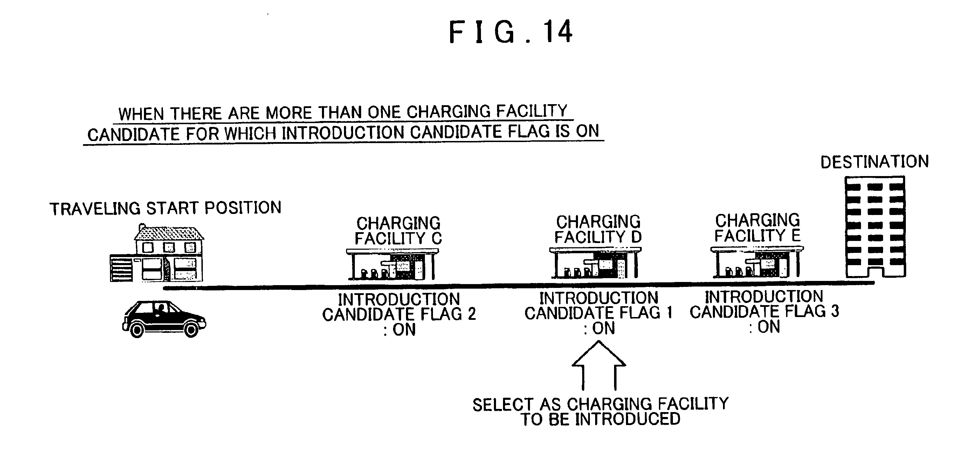

Further, as shown in FIG. 14, when a charging facility C, a charging facility D, and a charging facility E as the charging facility candidates are located along the outward route from the traveling start position to the destination, with the introduction candidate flag 2 being set to ON for the charging facility C, the introduction candidate flag 1 being set to ON for the charging facility D, and the introduction candidate flag 3 being set to ON for the charging facility E, the charging facility D is selected as the charging facility to be introduced.

Next, in S31, the CPU 51 introduces information (position coordinates of the charging facility, the name of the charging facility, a route from the traveling start position to the charging facility, and so on) related to the charging facility to be introduced selected in above-described S29 or S30 using the liquid crystal display 15 and/or the speaker 16. Specifically, the CPU 51 instructs the user to leave either of the first battery 7A or the second battery 7B as the battery to be left at the introduced charging facility and request charging thereof. Furthermore, the minimum required charging energy amount when requesting charging (that is, the charging amount for making the charging amount of the batteries 7A, 7B to be substantially zero when traveling is finished) may be informed. Thereafter, the charging facility introduction processing program is finished.

On the other hand, in S32, the CPU 51 determines whether or not there is any charging facility candidate for which the introduction candidate flag 2 is set to ON out of all the charging facility candidates detected in S7.

When it is determined as a result that there is the charging facility candidate for which the introduction candidate flag 2 is set to ON (S32: YES), the CPU 51 proceeds to S33. On the other hand, when it is determined that there is no charging facility candidate for which the introduction candidate flag 2 is set to ON (S32: NO), that is, when there exists only charging facility candidates for which the introduction candidate flag 3 is set to ON, the CPU 51 proceeds to S37.

In S33, the CPU 51 determines whether or not there are more than one charging facility candidate for which the introduction candidate flag 2 is set to ON. When it is determined that there are more than one charging facility candidate for which the introduction candidate flag 2 is set to ON (S33: YES), the charging facility candidate where the charging time calculated in S23 becomes smallest is selected as the charging facility (charging facility to be introduced) that is most suitable for the vehicle 2 to leave and request charging of one of the batteries 7A, 7B and also to stay and perform normal battery charging (S34).

On the other hand, when it is determined that there is only one charging facility candidate for which the introduction candidate flag 2 is set to ON (S33: NO), this charging facility candidate is selected as the charging facility (charging facility to be introduced) that is most suitable for the vehicle 2 to leave and request charging of one of the batteries 7A, 7B and also to stay and perform normal battery charging (S35).

Subsequently, in S36, the CPU 51 introduces information (position coordinates of the charging facility, the name of the charging facility, the charging time, a route from the traveling start position to the charging facility, and so on) related to the charging facility to be introduced selected in above-described S34 or S35 using the liquid crystal display 15 and/or the speaker 16. Specifically, the CPU 51 instructs the user to stay at the introduced charging facility and charge the battery that is not to be left out of the first battery 7A and the second battery 7B for the charging time calculated in S23 or longer, and to leave and request charging of the battery to be left at this charging facility. Furthermore, the minimum required charging energy amount when requesting charging (that is, the charging amount for making the charging amount of the batteries 7A, 7B to be substantially zero when traveling is finished) may be informed. Thereafter, the charging facility introduction processing program is finished.

On the other hand, in S37, the CPU 51 selects all the charging facility candidates detected in above-described S7 as the charging facilities (charging facilities to be introduced) which are not suitable for the vehicle 2 to leave and request charging of one of the batteries 7A, 7B, and where only normal battery charging is performed.

Subsequently, in S38, the CPU 51 introduces information (position coordinates of the charging facility, the name of the charging facility, the charging time, a route from the traveling start position to the charging facility, and so on) related to the charging facility to be introduced selected in above-described S37 using the liquid crystal display 15 and/or the speaker 16. Specifically, the CPU 51 instructs the user to stay at the introduced charging facility and charge the first battery 7A and the second battery 78 for the charging time calculated in above-described S26 or longer without leaving the batteries at the introduced charging facility. Thereafter, the charging facility introduction processing program is finished.

As described in detail above, in the navigation system 1 according to this embodiment, the traveling guidance method using the navigation system 1, and the computer program executed in the navigation system 1, there are performed: detecting one or more charging facilities on the route from the current position of the vehicle 2 to the destination as the charging facility candidate where a battery can be left for requesting charging (S7) when a destination is set; selecting the charging facility candidate most suitable for leaving the first battery 7A or the second battery 7B as the charging facility to be introduced from the detected one or more charging facility candidates (S29, S30, S34, S35); and introducing the selected charging facility to be introduced (S31, S36). Thus, by adopting the new charging method to leave and request charging of one of the batteries 7A, 7B at the charging facility, and introducing the most suitable charging facility as a place to leave one of the batteries 7A, 7B, it becomes possible to perform efficient charging in the vehicle having the plurality of batteries 7A, 7B. For example, the waiting time for charging the battery at the charging facility can be reduced.

Further, since the navigation system 1 selects the charging facility candidate where the round-trip usable energy amount, which is usable for making a round trip from the charging facility candidate to the destination, is equal to or larger than the round-trip required energy amount as the charging facility suitable for leaving one of the batteries 7A, 7B, it becomes possible to introduce the charging facility that makes it possible to complete round-trip traveling from the charging facility to the destination with one of the batteries 7A, 7B which is not left at the charging facility being a power supply source.

Moreover, since the charging facility for requesting charging is selected from the charging facilities located along the outward route from the traveling start position to the destination, it is possible to introduce the charging facility where one of the batteries 7A, 7B can be left without deviating from the guidance route. As a result, the vehicle is allowed to charge the battery without deviating from the route.

It should be noted that the present invention is not limited to the above embodiment, and as a matter of course, various improvements and modifications can be made.

For example, in this embodiment, there is described an example in which the present invention is applied to a navigation system provided in an electric vehicle using only a motor as a drive source, but the invention may be applied to a navigation system provided in a plug-in hybrid vehicle using a motor and an engine in combination as the drive source. In this situation, it is arranged that in the determination processing of above-described S6, it is determined whether or not traveling on the round-trip route from the traveling start position to the destination can be completed by what is called EV traveling in which only the drive motor 5 is used as the drive source.

In addition, the CPU 51 may be configured to make a selection based on the SOC value when the vehicle arrives at each charging facility candidate, when selecting the charging facility to be introduced from the charging facility candidates. Specifically, the following processing is executed after S 11.

First, based on the SOC values of the first battery 7A and the second battery 7B when the vehicle arrives at the charging facility candidate calculated in above-described S11, the CPU 51 determines whether or not there is any charging facility candidate where the SOC value of either the first battery 7A or the second battery 7B becomes substantially zero at the time of arrival.

When it is determined as a result of determination that there is the charging facility candidate where the SOC value of either the first battery 7A or the second battery 7B becomes substantially zero at the time of arrival, the charging facility candidate where the SOC value of either the first battery 7A or the second battery 7B becomes substantially zero at the time of arrival and which is closest to the traveling start position is selected as the charging facility to be introduced.

On the other hand, when it is determined that there is no charging facility candidate where the SOC value of either the first battery 7A or the second battery 7B becomes substantially zero at the time of arrival, the charging facility candidate where the SOC values of the first battery 7A and the second battery 7B become smallest at the time of arrival is selected as the charging facility to be introduced. That is, it becomes possible to perform efficient charging by choosing the on-vehicle battery which is unnecessary for the vehicle as an on-vehicle battery to be left at the charging facility.

Further, in this embodiment, there is described an example in which the present invention is applied to a navigation system provided in a vehicle having two batteries, the first battery 7A and the second battery 7B. However, the invention can also be applied to a navigation system provided in a vehicle having three or more batteries. In this situation, it is possible to leave and request charging of two or more batteries at once at one charging facility. Furthermore, it is also possible to leave and request charging of different batteries respectively at plural charging facilities.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A traveling guidance system having an ECU (33) comprising:

   a traveling start position obtaining unit that is adapted to obtain a traveling start position (71, 81, 91, 101, 111) of a vehicle (2) having a plurality of on-vehicle batteries (7A, 7B) used as a power supply source (6) to a drive source (5);
   a destination obtaining unit that is adapted to obtain a destination (72, 83, 93, 103, 113) of the vehicle (2);
   a charging facility candidate position obtaining unit that is adapted to obtain position information of a charging facility candidate (73, 82, 92, 102, 112) where it is possible to leave and request charging of at least one of the on-vehicle batteries (7A, 7B);
   a remaining amount calculating unit that is adapted to calculate remaining energy amounts of the on-vehicle batteries (7A, 7B) of the vehicle (2) when the vehicle (2), which starts traveling at the traveling start position (71, 81, 91, 101, 111), arrives at the charging facility candidate (73, 82, 92, 102, 112);

a charging facility selecting unit that is adapted to select from the charging facility candidate (73, 82, 92, 102, 112), as a charging facility suitable for the vehicle (2) to leave and request charging of at least one of the on-vehicle batteries (7A, 7B) on an outward route to the destination to be picked up on a homeward route from the destination, a charging facility candidate (73, 82, 92, 102, 112) that makes it possible to complete round-trip traveling from the charging facility candidate (73, 82, 92, 102, 112) to the destination (72, 83, 93, 103, 113) with at least one of the on-vehicle batteries (7A, 7B) which is not left at the charging facility candidate (73, 82, 92, 102, 112) being the power supply source (6) based on the traveling start position (71, 81, 91, 101, 111) of the vehicle (2), the destination (72, 83, 93, 103, 113) of the vehicle (2), the position information of the charging facility candidate (73, 82, 92, 102, 112), and the remaining energy amounts of the on-vehicle batteries (7A, 7B) calculated by the remaining amount calculating unit; and
a charging facility introducing unit that is adapted to introduce the charging facility selected by the charging facility selecting unit to a user.

2. The traveling guidance system according to claim 1, wherein:

   the charging facility selecting unit includes:

   a round-trip usable energy amount estimating unit that is adapted to estimate a round-trip usable energy amount ($E_{use}$, $E_{use}'$) usable in the drive source (5) generating a drive force of the vehicle (2), when the vehicle (2) leaves at least one of the on-vehicle batteries (7A, 7B) at the charging facility candidate (73, 82, 92, 102) and makes a round trip from the charging facility candidate (73, 82, 92, 102) to the destination (72, 83, 93, 103); and
   a round-trip required energy amount estimating unit that is adapted to estimate a round-trip required energy amount ($E_{nes}$) required for driving the drive source (5) generating the drive force of the vehicle (2) when the vehicle (2) makes the round trip from the charging facility candidate (73, 82, 92, 102) to the destination (72, 83, 93, 103), and
   the charging facility selecting unit is adapted to select the charging facility candidate (73, 82, 92, 102) where the round-trip usable energy amount ($E_{use}$, $E_{use}'$) is equal to or larger than the round-trip required energy amount ($E_{nes}$) as the charging facility suitable for leaving at least one of the on-vehicle batteries (7A, 7B).

3. The traveling guidance system according to claim 1 or 2, wherein:

the charging facility selecting unit includes:

a required energy amount estimating unit that is adapted to estimate a required energy amount required for driving the drive source (5) generating a drive force of the vehicle (2) when the vehicle (2) travels from the traveling start position (71, 81, 91, 101, 111) to the charging facility candidate (73, 82, 92, 102, 112); and
a battery remaining amount determining unit that is adapted to determine whether or not the remaining energy amount of at least one of the plurality of on-vehicle batteries (7A, 7B) becomes substantially zero when the vehicle (2) arrives at the charging facility candidate (73, 82, 92, 102, 112) based on the required energy amount estimated by the required energy amount estimating unit, and

the charging facility selecting unit is adapted to select the charging facility candidate (73, 82, 102) where the battery remaining amount determining unit determines that the remaining energy amount of the at least one on-vehicle battery (7A, 7B) becomes substantially zero as a charging facility suitable for leaving the on-vehicle batteries (7A, 7B).

4. The traveling guidance system according to any one of claims 1 to 3, wherein the ECU (33) further comprises
a route search unit that is adapted to search for a route of a round trip from the traveling start position (71, 81, 91, 101, 111) to the destination (72, 83, 93, 103, 113), and
the charging facility selecting unit is adapted to select a charging facility located along an outward route of the route searched by the route search unit as the charging facility candidate (73, 82, 92, 102, 112).

5. A traveling guidance method, comprising the steps of:

obtaining a traveling start position (71, 81, 91, 101, 111) of a vehicle (2) having a plurality of on-vehicle batteries (7A, 7B) used as a power supply source (6) to a drive source (5);
obtaining a destination (72, 83, 93, 103, 113) of the vehicle (2);
obtaining position information of a charging facility candidate (73, 82, 92, 102, 112) where it is possible to leave and request charging at least one of the on-vehicle batteries (7A, 7B);
calculating remaining energy amounts of the on-vehicle batteries (7A, 7B) when the vehicle (2), which starts traveling at the traveling start position (71, 81, 91, 101, 111), arrives at the charging facility candidate (73, 82, 92, 102, 112);
selecting from the charging facility candidate (73, 82, 92, 102, 112), as a charging facility suitable for the vehicle (2) to leave and request charging of at least one of the on-vehicle batteries (7A, 7B) on an outward route to the destination to be picked up on a homeward route from the destination, a charging facility candidate (73, 82, 92, 102, 112) that makes it possible to complete round-trip traveling from the charging facility candidate (73, 82, 92, 102, 112) to the destination (72, 83, 93, 103, 113) with at least one of the on-vehicle batteries (7A, 7B) which is not left at the charging facility candidate (73, 82, 92, 102, 112) being the power supply source (6) based on the traveling start position (71, 81, 91, 101, 111) of the vehicle (2), the destination (72, 83, 93, 103, 113) of the vehicle (2), the position information of the charging facility candidate (73, 82, 92, 102, 112), and the remaining energy amounts of the on-vehicle batteries (7A, 7B) calculated by the remaining amount calculation; and
introducing the charging facility selected by the charging facility selection to a user.

6. A computer program mounted in a computer, the computer program causing the computer to perform the steps of method claim 5.


**Patentansprüche**

1. Fahrführungssystem, das eine ECU (33) aufweist, mit:

einer Fahrstartpositionserhalteeinheit, die angepasst ist zum Erhalten einer Fahrstartposition (71,81,91, 101, 111) eines Fahrzeugs (2), das eine Mehrzahl von Am-Fahrzeug-Batterien (7A, 7B), die als eine Leistungsversorgungsquelle (6) zu einer Antriebsquelle (5) dienen, aufweist;
einer Zielerhalteeinheit, die angepasst ist zum Erhalten eines Ziels (73, 83, 93, 103, 113) des Fahrzeugs (2);
einer Ladeeinrichtungskandidatenpositionserhalteeinheit, die angepasst ist zum Erhalten einer Positionsinformation eines Ladeeinrichtungskandidaten (73, 82, 92, 102, 112), bei dem es möglich ist, mindestens eine der Am-Fahrzeug-Batterien (7A, 7B) zurückzulassen und ein Aufladen anzufordern;

einer Restmengeberechnungseinheit, die angepasst ist zum Berechnen von Restenergiemengen der Am-Fahrzeug-Batterien (7A, 7B) des Fahrzeugs (2), wenn das Fahrzeug (2), das ein Fahren an der Fahrstartposition (71,81,91, 101, 111) beginnt, an dem Ladeeinrichtungskandidaten (73, 82, 92, 102, 112) ankommt;

einer Ladeeinrichtungsauswähleinheit, die angepasst ist zum Auswählen, aus den Ladeeinrichtungskandidaten (73, 82, 92, 102, 112), als eine Ladeeinrichtung, die für das Fahrzeug (2) geeignet ist, mindestens eine der Am-Fahrzeug-Batterien (7A, 7B) auf einer Hinroute zu dem Ziel zurückzulassen und ein Aufladen anzufordern, um auf der Rückroute von dem Ziel aufgenommen zu werden, eines Ladeeinrichtungskandidaten (73, 82, 92, 102, 112), der es möglich macht, eine Hin- und Rückfahrt von dem Ladeeinrichtungskandidaten (73, 82, 92, 102, 112) zu dem Ziel (72, 83, 93, 103, 113) mit mindestens einer der Am-Fahrzeug-Batterien (7A, 7B), die nicht an dem Ladeeinrichtungskandidaten (73, 82, 92, 102, 112) zurückgelassen wird und die Leistungsversorgungsquelle (6) darstellt, zu vollenden, basierend auf der Fahrstartposition (71, 81, 91, 101, 111) des Fahrzeugs (2), dem Ziel (72, 83, 93, 103, 113) der Fahrzeugs (2), der Positionsinformation des Ladeeinrichtungskandidaten (73, 82, 92, 102, 112) und der Restenergiemengen der Am-Fahrzeug-Batterien (7A, 7B), die durch die Restmengeberechnungseinheit berechnet sind, und

einer Ladeeinrichtungseinführeinheit, die angepasst ist zum Einführen der Ladeeinrichtung, die durch die Ladeeinrichtungsauswähleinheit ausgewählt ist.

2. Das Fahrführungssystem nach Anspruch 1, bei dem die Ladeeinrichtungsauswähleinheit enthält:

eine Hin-und-Rückfahrt-verwendbare-Energiemenge-Abschätzeinheit, die angepasst ist zum Abschätzen einer Energiemenge ($E_{use}$, $E_{use'}$), die für die Hin- und Rückfahrt verwendbar ist und die in der Antriebsquelle (5), die eine Antriebskraft des Fahrzeugs (2) erzeugt, verwendbar ist, wenn das Fahrzeug (2) mindestens eine der Am-Fahrzeug-Batterien (7A, 7B) an dem Ladeeinrichtungskandidaten (73, 82, 92, 102) zurücklässt und eine Hin- und Rückfahrt von dem Ladeeinrichtungskandidaten (73, 82, 92, 102) zu dem Ziel (72, 83, 93, 103) macht; und eine Hin-und-Rückfahrt-erforderliche-Energiemenge-Abschätzeinheit, die angepasst ist zum Abschätzen einer Energiemenge ($E_{nes}$), die für eine Hin- und Rückfahrt erforderlich ist und die zum Antreiben der Antriebsquelle (5), die die Antriebskraft Fahrzeugs (2) erzeugt, erforderlich ist, wenn das Fahrzeug (2) eine Hin- und Rückfahrt von dem Ladeeinrichtungskandidaten (73, 82, 92, 102) zu dem Ziel (72, 83, 93, 103) macht, und

die Ladeeinrichtungsauswähleinheit angepasst ist zum Auswählen des Ladeeinrichtungskandidaten (73, 82, 92, 102), bei dem die Energiemenge ($E_{use}$, $E_{use'}$), die für die Hin- und Rückfahrt verwendbar ist gleich oder größer als die Energiemenge ($E_{nes}$), die für eine Hin- und Rückfahrt erforderlich ist, als den Ladeeinrichtungskandidaten, der zum Zurücklassen mindestens einer der Am-Fahrzeug-Batterien (7A, 7B) geeignet ist.

3. Das Fahrführungssystem nach Anspruch 1 oder 2, bei dem
die Ladeeinrichtungsauswähleinheit enthält:

eine Erforderliche-Energiemenge-Abschätzeinheit, die angepasst ist zum Abschätzen einer erforderlichen Energiemenge, die zum Antreiben der Antriebsquelle (5), die eine Antriebskraft des Fahrzeugs (2) erzeugt, wenn das Fahrzeug (2) von der Fahrstartposition (71, 81, 91, 101, 111) zu dem Ladeeinrichtungskandidaten (73, 82, 92, 102, 112) fährt, erforderlich ist; und eine Batterie-Restmenge-Bestimmungseinheit, die angepasst ist zum Bestimmen, ob oder nicht die Restenergiemenge von mindestens einer der Mehrzahl von Am-Fahrzeug-Batterien (7A, 7B) im wesentlichen Null wird, wenn das Fahrzeug (2) an dem Ladeeinrichtungskandidaten (73, 82, 92, 102, 112) ankommt, basierend auf der erforderlichen Energiemenge, der durch die Erforderliche-Energiemenge-Abschätzeinheit abgeschätzt ist, und

die Ladeeinrichtungsauswähleinheit angepasst ist zum Auswählen des Ladeeinrichtungskandidaten (73, 82, 102), bei dem die Batterie-Restmenge-Bestimmungseinheit bestimmt, dass die Restenergiemenge von der mindestens einen Am-Fahrzeug-Batterie (7A, 7B) im wesentlichen Null wird, als eine Ladeeinrichtung, die zum Zurücklassen der Am-Fahrzeug-Batterien (7A, 7B) geeignet ist.

4. Das Fahrführungssystem nach einem der Ansprüche 1 bis 3, bei dem die ECU (33) weiter aufweist eine Routensucheinheit, die angepasst ist zum Suchen nach einer Route eines Hin- und Rückwegs von der Fahrstartposition (71, 81, 91, 101, 111) zu dem Ziel (72, 83, 93, 103, 113), und
die Ladeeinrichtungsauswähleinheit zum Auswählen einer Ladeeinrichtung, die entlang der Hinroute der Route, die durch die Routensucheinheit ausgewählt ist, liegt, als den Ladeeinrichtungskandidaten (73, 82, 92, 102, 112).

**5.** Fahrführungsverfahren, mit den folgenden Schritten:

Erhalten einer Fahrstartposition (71, 81, 91, 101, 111) eines Fahrzeugs (2), das eine Mehrzahl von Am-Fahrzeug-Batterien (7A, 7B), die als eine Leistungsversorgungsquelle (6) zu einer Antriebsquelle (5) dienen;
Erhalten eines Ziels (72, 83, 93, 103, 113) des Fahrzeugs (2);
Erhalten einer Positionsinformation eines Ladeeinrichtungskandidaten (73, 82, 92, 102, 112), an dem es möglich ist, mindestens eine der Am-Fahrzeug-Batterien (7A, 7B) zurückzulassen und ein Aufladen anzufordern;
Berechnen von Restenergiemengen der Am-Fahrzeug-Batterien (7A, 7B), wenn das Fahrzeug (2), das ein Fahren an der Fahrstartposition (71, 81, 91, 101, 111) anfängt, an dem Ladeeinrichtungskandidaten (73, 82, 92, 102, 112) ankommt;
Auswählen, aus den Ladeeinrichtungskandidaten (73, 82, 92, 102, 112), als eine Ladeeinrichtung, die für das Fahrzeug (2) geeignet ist, mindestens eine der Am-Fahrzeug-Batterien (7A, 7B) auf einer Hinroute zu dem Ziel zurückzulassen und ein Aufladen anzufordern, um auf der Rückroute von dem Ziel aufgenommen zu werden, eines Ladeeinrichtungskandidaten (73, 82, 92, 102, 112), der es möglich macht, eine Hin- und Rückfahrt von dem Ladeeinrichtungskandidaten (73, 82, 92, 102, 112) zu dem Ziel (72, 83, 93, 103, 113) mit mindestens einer der Am-Fahrzeug-Batterien (7A, 7B), die nicht an dem Ladeeinrichtungskandidaten (73, 82, 92, 102, 112) zurückgelassen wird und die Leistungsversorgungsquelle (6) darstellt, zu vollenden, basierend auf der Fahrstartposition (71, 81, 91, 101, 111) des Fahrzeugs (2), dem Ziel (72, 83, 93, 103, 113) des Fahrzeugs (2), der Positionsinformation des Ladeeinrichtungskandidaten (73, 82, 92, 102, 112) und den Restenergiemengen der Am-Fahrzeug-Batterien (7A, 7B), die durch die Restmengenberechnung berechnet sind, und
Einführen der Ladeeinrichtung, die durch die Ladeeinrichtungsauswahl ausgewählt ist.

**6.** Computerprogramm, das in einem Computer installiert ist, wobei das Computerprogramm den Computer dazu bringt, die Schritte des Verfahrens nach Anspruch 5 durchzuführen.

**Revendications**

**1.** Système de guidage en déplacement ayant une ECU (33), comprenant :

une unité d'obtention de position de départ en déplacement, qui est à même d'obtenir une position de départ en déplacement (71, 81, 91, 101, 111) d'un véhicule (2) ayant une pluralité de batteries embarquées (7A, 7B) utilisées comme source d'alimentation en énergie (6) pour une source d'entraînement (5) ;
une unité d'obtention de destination, qui est à même d'obtenir une destination (72, 83, 93, 103, 113) du véhicule (2) ;
une unité d'obtention de la position d'une installation de chargement candidate, qui est à même d'obtenir des informations de position sur une installation de chargement candidate (73, 82, 92, 102, 112) où il est possible de laisser au moins l'une des batteries embarquées (7A, 7B) et d'en demander le chargement ;
une unité de calcul de quantités restantes, qui est à même de calculer les quantités d'énergie restantes des batteries embarquées (7A, 7B) du véhicule (2) lorsque le véhicule (2) qui commence à se déplacer dans la position de départ en déplacement (71, 81, 91, 101, 111) arrive à l'installation de chargement candidate (73, 82, 92, 102, 112) ;
une unité de sélection de l'installation de chargement, qui est à même de choisir, à partir de l'installation de chargement candidate (73, 82, 92, 102, 112) comme installation de chargement convenant au véhicule (2) pour laisser au moins l'une des batteries embarquées (7A, 7B) et en demander le chargement, sur une route aller vers la destination à prendre sur une route de retour de la destination, une installation de chargement candidate (73, 82, 92, 102, 112) qui permet d'effectuer le déplacement aller-retour de l'installation de chargement candidate (73, 82, 92, 102, 112) à la destination (72, 83, 93, 103, 113) avec au moins l'une des batteries embarquées (7A, 7B), qui n'est pas laissée à l'installation de chargement candidate (73, 82, 92, 102, 112) et qui est la source d'alimentation en énergie (6) sur la base de la position de départ en déplacement (71, 81, 91, 101, 111) du véhicule (2), de la destination (72, 83, 93, 103, 113) du véhicule (2), des informations de position de l'installation de chargement candidate (73, 82, 92, 102, 112) et des quantités d'énergie restantes des batteries embarquées (7A, 7B) calculées par l'unité de calcul de quantités restantes ; et
une unité d'introduction d'installation de chargement, qui est à même d'introduire l'installation de chargement choisie par l'unité de sélection de l'installation de chargement auprès d'un utilisateur.

2. Système de guidage en déplacement selon la revendication 1, dans lequel :

l'unité de sélection de l'installation de chargement comprend :

une unité d'estimation de la quantité d'énergie utilisable en voyage aller-retour, qui est à même d'estimer une quantité d'énergie utilisable en voyage aller-retour ($E_{usage}$, $E_{usage}$') utilisable dans la source d'entraînement (5) générant une force d'entraînement du véhicule (2), lorsque le véhicule (2) laisse au moins l'une des batteries embarquées (7A, 7B) à l'installation de chargement candidate (73, 82, 92, 102) et effectue un voyage aller-retour de l'installation de chargement candidate (73, 82, 92, 102) à la destination (72, 83, 93, 103) ; et une unité d'estimation de la quantité d'énergie requise pour le voyage aller-retour, qui est à même d'estimer une quantité d'énergie requise pour un voyage aller-retour ($E_{nes}$) requise pour entraîner la source d'entraînement (5) générant la force d'entraînement du véhicule (2) lorsque le véhicule (2) effectue le voyage aller-retour de l'installation de chargement candidate (73, 82, 92, 102) à la destination (72, 83, 93, 103), et l'unité de sélection de l'installation de chargement, qui est à même de choisir l'installation de chargement candidate (73, 82, 92, 102) où la quantité d'énergie utilisable pour l'aller-retour ($E_{usage}$, $E_{usage}$') est égale ou supérieure à la quantité d'énergie requise pour l'aller-retour ($E_{nes}$) comme installation de chargement convenant pour laisser au moins l'une des batteries embarquées (7A, 7B).

3. Système de guidage en déplacement selon la revendication 1 ou 2, dans lequel :

l'unité de sélection de l'installation de chargement comprend :

une unité d'estimation de la quantité d'énergie nécessaire, qui est à même d'estimer une quantité d'énergie nécessaire pour entraîner la source d'entraînement (5) générant une force d'entraînement du véhicule (2) lorsque le véhicule (2) se déplace de la position de départ en déplacement (71, 81, 91, 101, 111) à l'installation de chargement candidate (73, 82, 92, 102, 112) ; et une unité de détermination de la quantité restante de batteries, qui est à même de déterminer si la quantité d'énergie restante d'au moins l'une de la pluralité des batteries embarquées (7A, 7B) devient ou non sensiblement nulle lorsque le véhicule (2) arrive à l'installation de chargement candidate (73, 82, 92, 102, 112) sur la base de la quantité d'énergie requise estimée par l'unité d'estimation de la quantité d'énergie requise, et l'unité de sélection de l'installation de chargement, qui est à même de choisir l'installation de chargement candidate (73, 82, 102) lorsque l'unité de détermination de la quantité restante de batteries détermine que la quantité d'énergie restante de la au moins une batterie embarquée (7A, 7B) devient sensiblement nulle comme installation de chargement convenant pour laisser les batteries embarquées (7A, 7B).

4. Système de guidage en déplacement selon l'une quelconque des revendications 1 à 3, dans lequel l'ECU (33) comprend en outre :

une unité de recherche de route qui est à même de rechercher une route d'un voyage aller-retour de la position de départ en déplacement (71, 81, 91, 101, 111) à la destination (72, 83, 93, 103, 113) et l'unité de sélection de l'installation de chargement, qui est à même de choisir une installation de chargement située le long d'une route aller de la route recherchée par l'unité de recherche de route comme installation de chargement candidate (73, 82, 92, 102, 112).

5. Procédé de guidage en déplacement, comprenant les étapes consistant à :

obtenir une position de départ en déplacement (71, 81, 91, 101, 111) d'un véhicule (2) ayant une pluralité de batteries embarquées (7A, 7B) utilisées comme source d'alimentation en énergie (6) pour une source d'entraînement (5) ; obtenir une destination (72, 83, 93, 103, 113) du véhicule (2) ; obtenir des informations de position d'une installation de chargement candidate (73, 82, 92, 102, 112) où il est possible de laisser au moins l'une des batteries embarquées (7A, 7B) et d'en demander le chargement ; calculer des quantités d'énergie restantes des batteries embarquées (7A, 7B) lorsque le véhicule (2), qui commence à se déplacer dans la position de départ en déplacement (71, 81, 91, 101, 111) arrive à l'installation de chargement candidate (73, 82, 92, 102, 112) ;

choisir, à partir de l'installation de chargement candidate (73, 82, 92, 102, 112) comme installation de chargement convenant au véhicule (2) pour laisser au moins l'une des batteries embarquées (7A, 7B) et en demander le chargement, sur une route aller vers la destination à prendre sur une route de retour de la destination, une installation de chargement candidate (73, 82, 92, 102, 112) qui permet d'effectuer le déplacement aller-retour de l'installation de chargement candidate (73, 82, 92, 102, 112) à la destination (72, 83, 93, 103, 113) avec au moins l'une des batteries embarquées (7A, 7B), qui n'est pas laissée à l'installation de chargement candidate (73, 82, 92, 102, 112) et qui est la source d'alimentation en énergie (6) sur la base de la position de départ en déplacement (71, 81, 91, 101, 111) du véhicule (2), de la destination (72, 83, 93, 103, 113) du véhicule (2), des informations de position de l'installation de chargement candidate (73, 82, 92, 102, 112) et des quantités d'énergie restantes des batteries embarquées (7A, 7B) calculées par l'unité de calcul de quantités restantes ; et introduire l'installation de chargement choisie par l'unité de sélection de l'installation de chargement auprès d'un utilisateur.

6. Programme informatique installé dans un ordinateur, le programme informatique amenant l'ordinateur à effectuer les étapes de la revendication de procédé 5.

# F I G . 1

# F I G . 2

TO DRIVE MOTOR          TO DRIVE MOTOR

20A                     20B

| + | − |
|---|---|
| FIRST BATTERY | |

7A

| + | − |
|---|---|
| SECOND BATTERY | |

7B

6

# F I G . 3

BATTERY UNIT — 6

FIRST BATTERY 7A

SECOND BATTERY 7B

HOME/CHARGING FACILITY

DRIVE MOTOR — 5

18

BATTERY CONTROL ECU — 11

DRIVE MOTOR CONTROL ECU — 10

VEHICLE CONTROL ECU

22 RAM

21 CPU

23 ROM

9

NAVIGATION SYSTEM — 1

CURRENT POSITION DETECTING PORTION — 31

41 GPS

42 VEHICLE SPEED SENSOR

43 STEERING SENSOR

44 GYRO SENSOR

DATA RECORDING PORTION — 32

VEHICLE PARAMETER DB — 46

MAP INFORMATION DB — 47

33

NAVIGATION ECU

52 RAM

51 CPU

53

54 FLASH MEMORY

ROM

OPERATION UNIT 34

LIQUID CRYSTAL DISPLAY 15

SPEAKER 16

DVD DRIVE 37

COMMUNI-CATION MODULE 38

3

EP 2 181 884 B1

# FIG. 4

WHEN NOT USING CHARGE REQUESTING SYSTEM

PLACE OF DEPARTURE

OUTWARD ROUTE

DESTINATION

CHARGING FACILITY

HOMEWARD ROUTE

HOMEWARD ROUTE

CHARGING
(WAITING TIME
OCCURS)

# F I G . 5

WHEN USING CHARGE REQUESTING SYSTEM

PLACE OF DEPARTURE 71

CHARGING FACILITY 73

DESTINATION 72

OUTWARD ROUTE

OUTWARD ROUTE

7A 7B

7A 7B

7B

LEAVING BATTERY

CHARGING FACILITY 73

HOMEWARD ROUTE

HOMEWARD ROUTE

7A 7B

7B

7B

PICKING UP BATTERY
(NO WAITING TIME)

7A 7B

23

# FIG.6

START

OBTAIN TRAVELING START POSITION, DESTINATION ~S1

SEARCH FOR ROUND TRIP ROUTE TO DESTINATION
(IDENTIFY SCHEDULED TRAVELING ROUTE) ~S2

OBTAIN VEHICLE INFORMATION, ROUTE INFORMATION ~S3

ESTIMATE REQUIRED ENERGY AMOUNT
NECESSARY FOR ROUND TRIP FROM ~S4
TRAVELING START POSITION TO DESTINATION

OBTAIN BATTERY SOC VALUES ~S5

S6
IS ROUND TRIP
POSSIBLE FROM TRAVELING
START POSITION TO DESTINATION    YES
WITHOUT CHARGING?

NO    S7

SEARCH FOR CHARGING FACILITY CANDIDATE
ALONG OUTWARD ROUTE AND HOMEWARD    END
ROUTE AND OBTAIN INFORMATION OF
CHARGING FACILITY CANDIDATE

S8
IS THERE    NO
CHARGING FACILITY
CANDIDATE?    S9

YES    S10    GIVE NOTICE
FOR EACH CHARGING FACILITY CANDIDATE    THAT TRAVELING
IS NOT POSSIBLE

ESTIMATE REQUIRED ENERGY AMOUNT NECESSARY    END
FOR TRAVELING FROM TRAVELING START
POSITION TO CHARGING FACILITY CANDIDATE ~S10

CALCULATE REMAINING BATTERY AMOUNT WHEN
ARRIVING AT CHARGING FACILITY CANDIDATE ~S11

ESTIMATE REQUIRED ROUND TRIP TIME FROM
CHARGING FACILITY CANDIDATE TO DESTINATION ~S12

CALCULATE CHARGED ENERGY
AMOUNT UNTIL BATTERY IS PICKED UP ~S13

①

24

# F I G . 7

# FIG. 8

(2)

S27 — IS THERE CHARGING FACILITY CANDIDATE WHERE INTRODUCTION CANDIDATE FLAG 1 IS ON?

— NO →

S32 — IS THERE CHARGING FACILITY CANDIDATE WHERE INTRODUCTION CANDIDATE FLAG 2 IS ON?

— NO →

YES ↓

S28 — ARE THERE MORE THAN ONE CHARGING FACILITY?

— NO →

S30 — SELECT THIS CHARGING FACILITY CANDIDATE AS CHARGING FACILITY TO BE INTRODUCED

YES ↓

S33 — ARE THERE MORE THAN ONE CHARGING FACILITY?

— NO →

S35 — SELECT THIS CHARGING FACILITY CANDIDATE AS CHARGING FACILITY TO BE INTRODUCED

YES

S29 — SELECT CHARGING FACILITY CANDIDATE CLOSEST TO TRAVELING START POSITION AS CHARGING FACILITY TO BE INTRODUCED

S34 — SELECT CHARGING FACILITY CANDIDATE WHERE CHARGING TIME IS SHORTEST AS CHARGING FACILITY TO BE INTRODUCED

S37 — SELECT ALL CHARGING FACILITY CANDIDATES AS CHARGING FACILITY TO BE INTRODUCED

S31 — INTRODUCE CHARGING FACILITY TO BE INTRODUCED, AND INSTRUCT TO LEAVE AND REQUEST CHARGING OF BATTERY AT CHARGING FACILITY

S36 — INTRODUCE CHARGING FACILITY TO BE INTRODUCED, INSTRUCT TO LEAVE AND REQUEST CHARGING OF BATTERY AT CHARGING FACILITY, AND CHARGE OTHER BATTERY

S38 — INTRODUCE CHARGING FACILITIES TO BE INTRODUCED, INSTRUCT TO CHARGE BATTERY WITHOUT LEAVING AND REQUEST CHARGING OF BATTERY AT CHARGING FACILITY

END

EP 2 181 884 B1

# F I G . 9

CHARGING FACILITY (1)
FOR WHICH INTRODUCTION
CANDIDATE FLAG 1 IS SET TO ON
(LEAVING AND REQUESTING
CHARGING OF EMPTY BATTERY)

Euse = 0.6
Enes = 0.6

83

81

PLACE OF DEPARTURE

82

CHARGING FACILITY

DESTINATION

2    OUTWARD ROUTE

OUTWARD
ROUTE

REQUIRED TRAVELING
ENERGY AMOUNT
1.2

0.3

7A    7B

2.0

7A    7B

0.8

7B

0.5

LEAVING BATTERY
• CHARGEABLE ENERGY AMOUNT 1.0
• MINIMUM REQUIRED CHARGING
ENERGY AMOUNT 1.0

82

CHARGING FACILITY

HOMEWARD ROUTE

HOMEWARD
ROUTE

1.2

0.3

7A    7B

0

7B

0.2

7B

0.5

PICKING UP BATTERY

7A    7B

1.2

# FIG.10

CHARGING FACILITY (2)
FOR WHICH INTRODUCTION
CANDIDATE FLAG 1 IS SET TO ON
(LEAVING AND REQUESTING CHARGING
OF BATTERY WITH ENERGY LEFT)

Euse = 1.0
Enes = 0.6

91

92

93

PLACE OF DEPARTURE

CHARGING FACILITY

DESTINATION

2 OUTWARD ROUTE

OUTWARD ROUTE

REQUIRED TRAVELING
ENERGY AMOUNT
0.8

0.3

7A 7B

7A 7B

7B

2.0

1.2

0.7

LEAVING BATTERY
•CHARGEABLE ENERGY AMOUNT 0.8
•MINIMUM REQUIRED CHARGING
ENERGY AMOUNT 0.2

94

CHARGING FACILITY

HOMEWARD ROUTE

HOMEWARD
ROUTE

0.8

0.3

7A 7B

7B

7B

0

0.4

0.7

PICKING UP BATTERY

7A 7B

0.8

# F I G . 11

CHARGING FACILITY
FOR WHICH INTRODUCTION
CANDIDATE FLAG 2 IS SET TO ON

Euse = 0.4      Euse' = 0.6
Enes = 0.6

101

102

103

PLACE OF DEPARTURE

CHARGING FACILITY

DESTINATION

2   OUTWARD ROUTE

OUTWARD
ROUTE

REQUIRED TRAVELING
ENERGY AMOUNT
1.2

0.3

7A   7B

7A   7B

7B

2.0

0.8

0.7

LEAVING BATTERY
·CHARGEABLE ENERGY
AMOUNT 0.8
·MINIMUM REQUIRED
CHARGING ENERGY
AMOUNT 0.8

CHARGING BATTERY

1.0

102

CHARGING FACILITY

HOMEWARD ROUTE

HOMEWARD
ROUTE

1.2

0.3

7A   7B

7B

7B

0

0.4

0.7

PICKING UP BATTERY

7A   7B

1.2

# F I G . 12

CHARGING FACILITY FOR WHICH
INTRODUCTION CANDIDATE FLAG 3 IS SET TO ON

Euse = Euse' = 1.0
Enes = 1.2

113

111

PLACE OF DEPARTURE

112

CHARGING FACILITY

DESTINATION

2 OUTWARD ROUTE

OUTWARD
ROUTE

REQUIRED TRAVELING
ENERGY AMOUNT
0.8

0.6

| 7A | 7B |

1.9

| 7A | 7B |

1.1

| 7A | 7B |

1.4

BATTERY CHARGED

2.0

HOMEWARD ROUTE

1.4

| 7A | 7B |

0

| 7A | 7B |

1.4

# F I G . 13

EP 2 181 884 B1

WHEN THERE ARE MORE THAN ONE CHARGING FACILITY
CANDIDATE FOR WHICH INTRODUCTION CANDIDATE FLAG 1 IS ON

DESTINATION

TRAVELING START POSITION

CHARGING FACILITY A    CHARGING FACILITY B

INTRODUCTION
CANDIDATE FLAG 1
: ON

INTRODUCTION
CANDIDATE FLAG 1
: ON

SELECT AS CHARGING FACILITY
TO BE INTRODUCED

# F I G . 14

WHEN THERE ARE MORE THAN ONE CHARGING FACILITY
CANDIDATE FOR WHICH INTRODUCTION CANDIDATE FLAG IS ON

DESTINATION

TRAVELING START POSITION

CHARGING
FACILITY C

CHARGING
FACILITY D

CHARGING
FACILITY E

INTRODUCTION
CANDIDATE FLAG 2
: ON

INTRODUCTION
CANDIDATE FLAG 1
: ON

INTRODUCTION
CANDIDATE FLAG 3
: ON

SELECT AS CHARGING FACILITY
TO BE INTRODUCED

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10170293 B

- US 5815824 A